# EUROPÄISCHE PATENTSCHRIFT

(11) **EP 3 060 973 B1**
(45) Veröffentlichungstag und Bekanntmachung des Hinweises auf die Patenterteilung: **19.12.2018**
(21) Anmeldenummer: 14756003.1
(22) Anmeldetag: 18.08.2014
(51) Int. Cl.: G06F 3/0488, G01C 21/36, G06F 3/0481

(54) **ANSTEUEREINRICHTUNG UND VERFAHREN ZUM VERÄNDERN EINER WIEDERGABE EINER MEHRZAHL VON ANZEIGEBEREICHEN**
CONTROL DEVICE AND METHOD FOR ADJUSTING THE DISPLAY OF A PLURALITY OF DISPLAY AREAS
DISPOSITIF DE CONTRÔLE ET PROCÉDÉ POUR MODIFIER LA VISUALISATION D'UNE PLURALITÉ DE ZONES D'AFFICHAGE

(30) Priorität: 24.10.2013 DE 102013221628
(43) Veröffentlichungstag der Anmeldung: 31.08.2016
(73) Patentinhaber: Volkswagen Aktiengesellschaft, 38440 Wolfsburg (DE)
(72) Erfinder: CHUDZINSKI, Filip Piotr, 10557 Berlin (DE)
(86) Internationale Anmeldenummer: PCT/EP2014/067526
(87) Internationale Veröffentlichungsnummer: WO 2015/058878

(56) Entgegenhaltungen:
- US-A1- 2005 149 879
- US-A1- 2011 178 697
- US-A1- 2013 253 831

## Beschreibung

Ausführungsbeispiele beziehen sich auf eine Ansteuervorrichtung zum Verändern einer Wiedergabe einer Mehrzahl von Anzeigebereichen auf einer Anzeigefläche, sowie auf eine Vorrichtung mit der Ansteuervorrichtung, auf ein Verfahren zum Verändern einer Wiedergabe einer Mehrzahl von Anzeigebereichen auf einer Anzeigefläche und ein Computerprogramm zur Durchführung des Verfahrens.

Bei vielen konventionellen Navigationsgeräten, Routenplanern oder dergleichen werden einem Nutzer sogenannte Points of Interest (von Englisch: "interessantes Ziel") vorgeschlagen. Oft können diese Ziele von anderen Benutzern vorgeschlagen oder kommentiert werden. Points of Interest, also mögliche Ziele, werden einem Benutzer meist mit einem Bezug zu einem Standpunkt des Benutzers vorgeschlagen. Viele der konventionellen Navigationssysteme oder Routenplaner können eine Route zu einem Point of Interest von einem Standpunkt aus vorschlagen. Solche konventionellen Navigationsgeräte sind beispielsweise in der US 2011/178697 A1 oder der US 2013/253831 beschrieben.

In vielen Fällen kann es einem Benutzer schwer fallen, sich für eines der vorgeschlagenen, möglichen Ziele zu entscheiden. Dies kann unterschiedliche Gründe haben. Beispielsweise kann es für den Benutzer auch schwierig sein, sich aufgrund der vielen vorgeschlagenen Ziele einen Überblick über die vorgeschlagenen Ziele zu erhalten. Aus der US 2005/149879 A1 ist beispielsweise ein Task- bzw. Fenstermanagementsystem für einen Computer bekannt, mit dem Fenster die auf einem Bildschirm geöffnet sind, übersichtlicher dargestellt werden können. Dazu werden nicht aktive Fenster als verkleinertes Symbol dargestellt.

Es besteht daher ein Bedarf daran, eine Auswahl eines möglichen Ziels für einen Benutzer zu vereinfachen.

Diesem Bedarf tragen eine Ansteuereinrichtung, das Verfahren und das Computerprogramm gemäß den unabhängigen Ansprüchen Rechnung.

Einige Ausführungsbeispiele betreffen eine Ansteuereinrichtung. Diese dient zum Verändern einer Wiedergabe einer Mehrzahl von Anzeigebereichen auf einer Anzeigefläche. Dabei wird ein erster Anzeigebereich in einem Vordergrund und ein zweiter Anzeigebereich in einem Hintergrund angezeigt. Der erste Anzeigebereich überlappt den zweiten Anzeigebereich teilweise. Jedem der Anzeigebereiche ist jeweils eine Information zu einem möglichen Ziel zugeordnet. Ferner besitzt die Ansteuereinrichtung eine Eingangseinrichtung. Die Eingangseinrichtung ist ausgebildet, um ein Speichersignal zu empfangen. Das Speichersignal korrespondiert zu einer vorbestimmten Auswahlgeste eines Benutzers. Die Ansteuereinrichtung umfasst auch einen Controller. Dieser ist ausgebildet, um ein Anzeigesignal zu erzeugen, wenn die Eingangseinrichtung das Speichersignal empfängt. Dabei ist der Controller ausgebildet das Anzeigesignal so zu erzeugen, dass eine Anzeige des zweiten Anzeigebereichs in dem Vordergrund bewirkt wird. Zusätzlich wird eine Anzeige eines Hinweisfeldes bewirkt. Das Hinweisfeld korrespondiert zu der Information des ersten Anzeigebereichs. Das Hinweisfeld wird außerhalb der Mehrzahl der Anzeigebereiche bewirkt.

Einige Ausführungsbeispiele betreffen ein Verfahren zum Verändern einer Wiedergabe einer Mehrzahl von Anzeigebereichen auf einer Anzeigefläche. Bei dem Verfahren wird eine Mehrzahl von Anzeigebereichen angezeigt. Ein erster Anzeigebereich in einem Vordergrund überlappt dabei einen zweiten Anzeigebereich in einem Hintergrund zumindest teilweise. Jedem der Anzeigebereiche ist jeweils eine Information zu einem möglichen Ziel zugeordnet. Ferner wird bei dem Verfahren ein Speichersignal empfangen, das zu einer vorbestimmten Auswahlgeste eines Benutzers korrespondiert. Bei dem Verfahren wird auch ein Anzeigesignal erzeugt. Dies erfolgt in Reaktion auf das Speichersignal. Das Anzeigesignal bewirkt eine Anzeige des zweiten Anzeigebereichs in dem Vordergrund und eine Anzeige eines zu der Information des ersten Anzeigebereichs korrespondierenden Hinweisfeldes. Das Hinweisfeld wird in einem, die Mehrzahl der Anzeigebereiche nicht überlappenden Bereich, auf der Anzeigefläche dargestellt.

Dadurch, dass der zweite Anzeigebereich in dem Vordergrund angezeigt wird und ein Hinweisfeld angezeigt wird, das auf die Information des ersten Anzeigebereichs hinweist, kann bei manchen Ausführungsbeispielen ermöglicht werden, dass der Benutzer den ersten Anzeigebereich in einem Zwischenspeicher ablegen kann. Wenn er den ersten Anzeigebereich und damit auch die Information zu einem ersten möglichen Ziel gesehen hat, kann er diesen von dem darunter liegenden zweiten Anzeigebereich entfernen. Durch das Hinweisfeld, das sich auf die Information des ersten Anzeigebereichs bezieht, bleibt dem Benutzer das erste Ziel in Erinnerung. Gleichzeitig kann sich der Benutzer über ein weiteres mögliches Ziel des zweiten Anzeigebereichs informieren.

Der Anzeigebereich kann jedwede Form und Gestaltung aufweisen. Beispielsweise kann der Anzeigebereich eine rechteckige, quadratische, vieleckige oder viereckige Form aufweisen. Beispielsweise können der erste Anzeigebereich und der zweite Anzeigebereich bzw. die Mehrzahl der Anzeigebereiche in Form eines Karteikartenstapels angeordnet sein, die durch eine Bedienbewegung des Benutzers verschoben werden können.

Als Information zu einem möglichen Ziel kann dem Anzeigebereich beispielsweise eine Information zu einer Position des Ziels, eine Adresse des Ziels, ein Name des Ziels, eine Art oder eine Kategorie des Ziels zugeordnet sein. Beispielsweise kann ein Teil der Informationen, die dem Anzeigebereich zu einem möglichen Ziel zugeordnet ist, in dem Anzeigebereich angezeigt werden. Ferner kann ein anderer Teil der Information beispielsweise zum Generieren einer anderen Information, die in dem Anzeigebereich angezeigt werden kann, genutzt werden. Bei dieser Information kann es sich beispielsweise um eine Entfernungsangabe handeln. Dabei kann sich die Entfernungsangabe beispielsweise auf eine Entfernung zwischen dem Ziel und eine, Standpunkt eines Benutzers beziehen. Beispielsweise kann der Standpunkt des Benutzers ein tatsächlicher Standpunkt des Benutzers sein. Ferner kann der Standpunkt des Benutzers ein von dem Benutzer gewählter Standpunkt sein. Beispielsweise kann ein mögliches Ziel ein Point of Interest, ein Restaurant, eine Sehenswürdigkeit, eine Freizeitstätte, ein Schwimmbad, etc. sein.

Eine vorbestimmte Auswahlgeste eines Benutzers kann beispielsweise eine Bedienbewegung eines Benutzers sein. Dies kann ggf. innerhalb eines vorbestimmten Bereichs auf oder über der Anzeigefläche erfolgen. Beispielsweise kann die Auswahlgeste von der Anzeigefläche beabstandet sein oder mit einem Kontakt zu der Anzeigefläche erfolgen. Beispielsweise kann die Auswahlgeste des Benutzers auf jedwede Art und Weise erfasst werden. Dazu kann beispielsweise ein kapazitiver, resistiver oder kamerabasierter Sensor eingesetzt werden.

Als Anzeigefläche kann jedwede Art von Anzeigefläche verwendet werden. Beispielsweise kann die Anzeigefläche ein Touchscreen, ein Display oder etc. sein. Signale können dabei beispielsweise einen binäre, analogen, digitalen oder elektrischen Wert repräsentieren oder eine Information, die durch einen Wert repräsentiert ist. Eine Eingangseinrichtung kann jedwede Einrichtung sein, die ausgebildet ist, um zumindest eines der genannten Signale zu empfangen. Beispielsweise kann die Eingangseinrichtung eine Schnittstelle, ein Kontakt, ein Register oder etc. sein. Ein Controller kann jedwede Einrichtung sein, die ausgebildet ist, um zumindest eines der genannten Signale zu verarbeiten. Beispielsweise kann der Controller ein Prozessor, ein digitaler Signalprozessor, ein Hauptprozessor (CPU vom englischen: Central Processing Unit, einem Multizweckprozessor (MPP von englisch Multi Purpose Prozessor) oder etc. sein.

Das Hinweisfeld kann beispielsweise so außerhalb der Mehrzahl der Anzeigebereiche dargestellt werden, dass es die Anzeigebereiche nicht überlappt. Beispielsweise kann das Hinweisfeld in einem Randbereich der Anzeigefläche angezeigt werden. Beispielsweise kann das Hinweisfeld jedwede Form und Gestaltung aufweisen. Beispielsweise kann das Hinweisfeld ein Piktogramm oder ein Symbol sein, das auf weitere Informationen verweist. Beispielsweise kann das Hinweisfeld zumindest teilweise den Anzeigebereich abbilden.

Bei einigen weiteren Ausführungsbeispielen ist der Controller ferner ausgebildet, um das Anzeigesignal so zu verändern, dass eine Wiedergabe des ersten Anzeigebereichs, zu dem das Hinweisfeld korrespondiert, bewirkt wird. Eine solche Veränderung des Anzeigesignals erfolgt, wenn ein Aufrufsignal empfangen wird, das zu einer weiteren Auswahlgeste des Benutzers korrespondiert. So kann bei manchen Ausführungsbeispielen ermöglicht werden, dass der erste Anzeigebereich wieder aus einem Zwischenspeicher aufgerufen werden kann.

Bei einigen weiteren Ausführungsbeispielen ist die Eingangseinrichtung ausgebildet, um das Aufrufsignal zu empfangen, wenn die Auswahlgeste, zu der das Aufrufsignal korrespondiert, an dem Hinweisfeld beginnt. So kann bei manchen Ausführungsbeispielen ermöglicht werden, dass der Benutzer mit einer Auswahlgeste den in dem Zwischenspeicher abgelegten Anzeigebereich aufrufen kann, der zum dem Hinweisfeld korrespondiert. Die Auswahlgeste, zu der das Aufrufsignal korrespondiert, kann dabei beispielsweise jedwede Bewegung oder Geste sein, die in oder an dem Hinweisfeld beginnt. Als möglicher Starpunkt für die Bedienbewegung kann beispielsweise auch ein Bereich definiert sein, der etwas größer als das Hinweisfeld selbst ist. So kann bei manchen Ausführungsbeispielen eine möglichst intuitive Bedienung und Aufrufbarkeit des Anzeigebereichs ermöglicht werden.

Bei einigen weiteren Ausführungsbeispielen ist die Eingangseinrichtung ausgebildet, um das Speichersignal zu empfangen, wenn die Auswahlgeste, zu der das Eingangssignal korrespondiert, an dem Anzeigebereich beginnt. So kann bei manchen Ausführungsbeispielen ermöglicht werden, dass der Benutzer über eine intuitive Bewegung, die an dem Auswahlbereich beginnt, den Auswahlbereich in den Zwischenspeicher schieben kann. Weil bei manchen Ausführungsbeispielen der Anzeigebereich eine entsprechende Größe aufweisen kann, könnte die Bedienung ohne genaues Zielen des Benutzers ermöglicht werden.

Bei einigen weiteren Ausführungsbeispielen ist der Controller ausgebildet, um ein Anzeigesignal so zu erzeugen, dass eine Anzeige des zweiten Anzeigebereichs in dem Vordergrund und ein Ausblenden und/oder Löschen des Anzeigebereichs bewirkt wird. Das Anzeigesignal wird auf diese Art und Weise erzeugt, wenn die Eingangseinrichtung ein Löschsignal empfängt, das zu einer weiteren Auswahlgeste eines Benutzers korrespondiert. Dadurch kann bei manchen Ausführungsbeispielen ermöglicht werden, dass ein Benutzer einen Anzeigebereich, dessen Ziel ihn nicht interessiert, löscht. Der Anzeigebereich wird dann nicht in einen Zwischenspeicher ablegt, sondern gelöscht. Dann kann der von dem Anzeigebereich teilweise überdeckte zweite Anzeigebereich zu gesehen werden. Ein Löschen des Anzeigebereichs kann dabei beispielsweise durch ein Ausblenden des Anzeigebereichs und ein nicht Anzeigen eines entsprechenden Hinweisfeldes, das auf die Information des Anzeigebereichs verweist, bewirkt werden.

Bei einigen weiteren Ausführungsbeispielen ist die Eingangseinrichtung ausgebildet, um das Löschsignal zu empfangen. Dies erfolgt in Reaktion auf eine Auswahlgeste oder eine Löschauswahlgeste, zu der das Löschsignal korrespondiert. Die Löschauswahlgeste beginnt an dem Anzeigebereich, der gelöscht werden soll. Ferner erstreckt sich die Löschauswahlgeste in eine andere Richtung als die Auswahlgeste, zu der das Eingangssignal, korrespondiert. Bei manchen Ausführungsbeispielen kann so auf einfache Art und Weise ermöglicht werden, dass der Benutzer intuitiv einen interessanten Anzeigebereich in einen Zwischenspeicher schieben und einen Anzeigebereich, dessen Information er nicht weiter beachten möchte, löschen kann. Beispielsweise kann die Auswahlgeste zu der das Speichersignal korrespondiert, jedwede Auswahlgeste sein, die an einem Rand des Anzeigebereichs beginnt. Beispielsweise kann die Auswahlgeste, zu der das Speichersignal korrespondiert, von dem Anzeigebereich zu einem der Ränder der Anzeigefläche gerichtet sein. Die Auswahlgeste kann sich beispielsweise zu einem oberen Rand, einem unteren Rand, einem rechten Rand oder einem linken Rand der Anzeigefläche erstrecken. Beispielsweise kann sich die Auswahlgeste auch in eine der Ecken der Anzeigefläche erstrecken. Die Richtungsangaben können sich dabei auf eine Sicht auf die Anzeigefläche zum Lesen einer Information des Anzeigebereichs beziehen. Beispielsweise kann sich die Löschauswahlgeste in jedwede andere Richtung erstrecken als die Auswahlgeste, zu der das Speichersignal, korrespondiert. Ferner kann sich die Löschauswahlgeste nach oben, nach unten, nach rechts, nach links und/oder in die Ecken der Anzeigefläche erstrecken, wenn sich die Auswahlgeste, zu der das Speichersignal korrespondiert, nicht in diese Richtung erstreckt. Beispielsweise kann sich die Löschauswahlgeste in die entgegengesetzte Richtung erstrecken, zu der das Speichersignal korrespondiert. So könnte beispielsweise für den Benutzer eine einfache Unterscheidung zwischen den beiden Vorgängen Speichern und Löschen des Anzeigebereichs geschaffen werden. Ferner kann sich die Auswahlgeste, zu der das Löschsignal korrespondiert, auch zu einem unteren Rand und die Auswalgeste, zu der das Speichersignal korrespondiert, zu einem oberen Rand der Anzeigefläche erstrecken.

Bei einigen weiteren Ausführungsbeispielen ist der Controller ausgebildet, um das Anzeigesignal so zu erzeugen, dass das Hinweisfeld zu der Information einer Mehrzahl von Anzeigebereichen korrespondiert. So kann bei manchen Ausführungsbeispielen ermöglicht werden, dass der Benutzer eine Mehrzahl von Anzeigebereichen in den Zwischenspeicher schieben oder ablegen kann. Beispielsweise kann aus dem Hinweisfeld erkennbar sein, dass es zu einer Mehrzahl von Anzeigebereichen korrespondiert. So könnte eine für den Benutzer wichtige Information, nämlich, dass sich eine Mehrzahl von Anzeigebereichen oder möglichen Zielen in dem Zwischenspeicher befinden, auf einfache Art und Weise vermittelt werden. Alternativ kann das Hinweisfeld, auch wenn es zu einer Mehrzahl von Anzeigebereichen korrespondiert immer gleich ausgebildet sein.

Bei einigen weiteren Ausführungsbeispielen ist der Controller ausgebildet, um ansprechend auf das Aufrufsignal das Anzeigesignal so zu verändern, dass eine Wiedergabe der Anzeigebereiche bewirkt wird, zu denen das Hinweisfeld korrespondiert. Dabei können die Anzeigebereiche nebeneinander geordnet sein. Mit anderen Worten ausgedrückt, können die Anzeigebereiche so wiedergegeben werden, dass sie sich nicht überlappen. Beispielsweise können die Anzeigebereiche nicht als Stapel dargestellt sein. So kann bei manchen Ausführungsbeispielen ermöglicht werden, dass sich die Darstellung von den möglichen Zielen in einem unsortierten Zustand als Kartenstapel unterscheidet. So könnte der Benutzer beispielsweise aus der Darstellung der Anzeigebereich erkennen, dass es sich um Anzeigebereiche oder Ziele handelt, die er bereits gesehen und zwischengespeichert, also vorsortiert hat.

Bei einigen weiteren Ausführungsbeispielen ist der Controller ausgebildet, um das Anzeigesignal so zu verändern, dass nur so viele Anzeigebereiche auf der Anzeigefläche angezeigt werden, dass sich diese nicht überlappen. Dies erfolgt, wenn so viele Anzeigebereiche zu dem Hinweisfeld korrespondieren, dass eine Summe der Breite der Anzeigebereiche eine Breite der Anzeigefläche übersteigt. Beispielsweise können die Anzeigebereiche in zumindest einer Zeile und/oder zumindest einer Spalte wiedergegeben werden. Ferner kann der Controller ausgebildet sein, um ansprechend auf ein Verschiebesignal, das von der Eingangseinrichtung empfangen wird und zu einer weiteren Bediengeste des Benutzers korrespondiert, das Anzeigesignal so zu verändern, dass die Anzeigebereiche entlang einer horizontalen Richtung der Anzeigefläche verschoben werden können. So könnte bei manchen Ausführungsbeispielen ermöglicht werden, dass auf einfache Art und Weise alle Anzeigebereiche nacheinander auf der Anzeigefläche dargestellt werden können. Beispielsweise kann sich eine horizontale Richtung der Anzeigefläche von einem rechten Rand der Anzeigefläche zu einem linken Rand der Anzeigefläche erstrecken. Beispielsweis kann die Bedienung per Swipe erfolgen (von engl.: "Schieben"). Bei einigen weiteren Ausführungsbeispielen können die Anzeigebereiche auch in einer vertikalen Richtung der Anzeigefläche nebeneinander bzw. übereinander wiedergeben werden.

Bei einigen weiteren Ausführungsbeispielen ist der Controller ausgebildet, um das Anzeigesignal so zu erzeugen, dass eine Wiedergabe einer Karte oder eines Kartenausschnitts als Hintergrund bewirkt wird. Dabei können mögliche Ziele, zu denen die Anzeigebereiche Informationen umfasst, zumindest teilweise in einem Bereich der wiedergegebenen Karte liegen. Bei manchen Ausführungsbeispielen kann der Benutzer so eine Information zu einer Lage der möglichen Ziele erhalten.

Bei einigen weiteren Ausführungsbeispielen ist die Eingangseinrichtung ausgebildet, um ein Zielsignal zu empfangen. Das Zielsignal umfasst eine Information zu einer Mehrzahl der möglichen Ziele, wobei die Anzeigebereiche basierend auf dem Zielsignal angezeigt werden. Bei manchen Ausführungsbeispielen kann so ermöglicht werden, dass eine Information, die zu den Anzeigebereichen korrespondiert, bereitgestellt werden kann. Beispielsweise kann das Zielsignal basierend auf einem Filter oder einer Vorauswahl empfangen werden. Beispielsweise kann die Vorauswahl in Abhängigkeit von Interessen eines Benutzers, früher gewählten Zielen des Benutzers oder anderer Informationen, die über den Benutzer bereit stehen, erfolgen.

Bei einigen weiteren Ausführungsbeispielen ist die Eingangseinrichtung ausgebildet, um ein Temperatursignal zu empfangen, das eine Information über eine Temperatur umfasst. Die Anzeigebereiche werden basierend auf der Information des Temperatursignals angezeigt. So kann bei manchen Ausführungsbeispielen eine Filterfunktion ermöglicht werden. Beispielsweise können Temperaturbereiche definiert sein. Beispielsweise kann jedem Temperaturbereich eine Mehrzahl von möglichen Zielen zugeordnet sein. Beispielsweise kann bei manchen Ausführungsbeispielen ermöglicht werden, dass bei bestimmten Temperaturen, beispielsweise unterhalb einer bestimmten Grenztemperatur keine Anzeigebereiche, die bestimmten Zielen zugeordnet sind, angezeigt werden. Diese Ziele können beispielsweise Eisdielen, oder Freibäder oder dergleichen sein. Ferner könnte beispielsweise auch ermöglicht werden, dass über einer bestimmten Grenztemperatur keine Anzeigebereiche, die bestimmten Zielen zugeordnet sind, angezeigt werden. Diese Ziele können beispielsweise eine Sauna, ein Hallenbad, ein Eislaufplatz, ein Skilift oder etc. sein.

Bei einigen weiteren Ausführungsbeispielen ist die Eingangseinrichtung ausgebildet, um ein Umgebungssignal zu empfangen, das eine Information über eine Umgebung umfasst. Die Anzeigebereiche werden basierend auf der Information des Umgebungssignals angezeigt. So kann bei manchen Ausführungsbeispielen ermöglicht werden, dass nur Ziele, die sich in einer Umgebung eines Benutzers oder einer virtuellen Umgebung des Benutzers befinden, angezeigt werden. Beispielsweise kann das Umgebungssignal eine Information zu einem Standort des Benutzers aufweisen. Beispielsweise kann der Standort ein echter Standort, ein gewählter oder eingegebener Standort des Benutzers sein. Beispielsweise kann das Umgebungssignal auch eine Information zu einem Bereich aufweisen, in dem die Ziele angezeigt werden sollen. Der Bereich kann beispielsweise ein Umkreis um einen Standpunkt des Benutzers sein. So könnte beispielsweise ermöglicht werden, dass der Benutzer nur Informationen zu Zielen erhält, die in sinnvoller Reichweite liegen. Der Bereich kann dabei beispielsweise als eine Kilometerangabe oder eine Zeitangabe definiert sein.

Das Umgebungssignal und/oder das Temperatursignal können beispielsweise zu einer von einem Benutzer gewählten Filtereinstellung korrespondieren.

Bei einigen weiteren Ausführungsbeispielen ist der Controller ausgebildet, um das Anzeigesignal so zu erzeugen, dass in dem Anzeigebereich eine Information über eine Anzahl von Besuchern des Ziels wiedergegeben wird. Beispielsweise kann es sich dabei um eine Gesamtanzahl von Besuchern des Ziels handeln. Ergänzend oder alternativ kann es sich auch um eine Anzahl von Besuchern handeln, die sich aktuell an dem Ziel befinden. So könnte der Benutzer eine Information erhalten, die ihn bei der Entscheidung für ein Ziel unterstützen kann. Beispielsweise kann diese Information aus einem sozialen Netzwerk, in dem andere Benutzer angeben können, ob sie den Ort besucht haben, stammen.

Einige Ausführungsbeispiele betreffen eine Vorrichtung mit der Ansteuereinrichtung nach zumindest einem der vorhergehenden Ausführungsbeispiele und einer Anzeigeeinrichtung. Die Anzeigeeinrichtung zeigt eine Anzeige gemäß dem Anzeigesignal an. Beispielsweise kann die Vorrichtung ein Smartphone, ein Laptop, ein Tablet-PC, eine Anzeigevorrichtung, die fest in einem Fahrzeug installiert ist, oder dergleichen sein. So kann beispielsweise ermöglicht werden, dass ein Benutzer der sich auf der Vorrichtung mögliche Ziele in seiner Umgebung anzeigen lassen möchte, diese auswählen, vorsortieren und/oder zwischenspeichern kann.

Bei einigen weiteren Ausführungsbeispielen gibt die Ansteuereinrichtung bei Herstellung einer Verbindung zwischen der Vorrichtung und einem fahrzeuginternen Navigationsgerät ein Navigationssignal aus. Das Navigationssignal bewirkt eine Ausgabe einer Navigation mittels des fahrzeuginternen Navigationsgeräts zu einem ausgewählten Ziel. So kann bei manchen Ausführungsbeispielen ermöglicht werden, dass ein Benutzer, beispielsweise Zuhause, mit der Vorrichtung ein Ziel sucht und auswählt. Dann kann er die Vorrichtung in einem Fahrzeug anschließen und sich von dem Navigationssystem des Fahrzeugs zu dem Ziel navigieren lassen. Mit anderen Worten ausgedrückt, kann die Vorrichtung bei manchen Ausführungsbeispielen als ein mobiles Gerät an ein fahrzeugeigenes Navigationsgerät andockbar sein. Das Navigationsgerät kann dann beispielsweise automatisch eine Route zu dem auf dem mobilen Gerät ausgewählten Ziel generieren.

Einige Ausführungsbeispiele betreffen ein Computerprogramm zur Durchführung des Verfahrens nach zumindest einem Ausführungsbeispiel, wenn das Computerprogramm auf einer programmierbaren Hardwarekomponente abläuft.

Ausführungsbeispiele der vorliegenden Erfindung werden nachfolgend bezugnehmend auf die beiliegenden Figuren näher erläutert. Es zeigen:
- Fig. 1: zeigt eine schematische Darstellung einer Ansteuereinrichtung zum Verändern einer Wiedergabe einer Mehrzahl von Anzeigebereichen auf einer Anzeigefläche gemäß einem Ausführungsbeispiel;
- Fig. 2: zeigt eine schematische Darstellung eines Verfahrens zum Verändern einer Wiedergabe einer Mehrzahl von Anzeigebereichen auf einer Anzeigefläche gemäß einem Ausführungsbeispiel;
- Fig. 3: zeigt eine schematische Darstellung einer Wiedergabe auf einer Anzeigefläche gemäß einem Ausführungsbeispiel;
- Fig. 4: zeigt eine schematische Darstellung einer Wiedergabe auf einer Anzeigefläche gemäß einem weiteren Ausführungsbeispiel;
- Fig. 5: zeigt eine schematische Darstellung einer Wiedergabe auf einer Anzeigefläche gemäß einem weiteren Ausführungsbeispiel;
- Fig. 6: zeigt eine schematische Darstellung einer Wiedergabe auf einer Anzeigefläche gemäß einem weiteren Ausführungsbeispiel; und
- Fig. 7: zeigt eine schematische Darstellung einer Wiedergabe auf einer Anzeigefläche gemäß einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

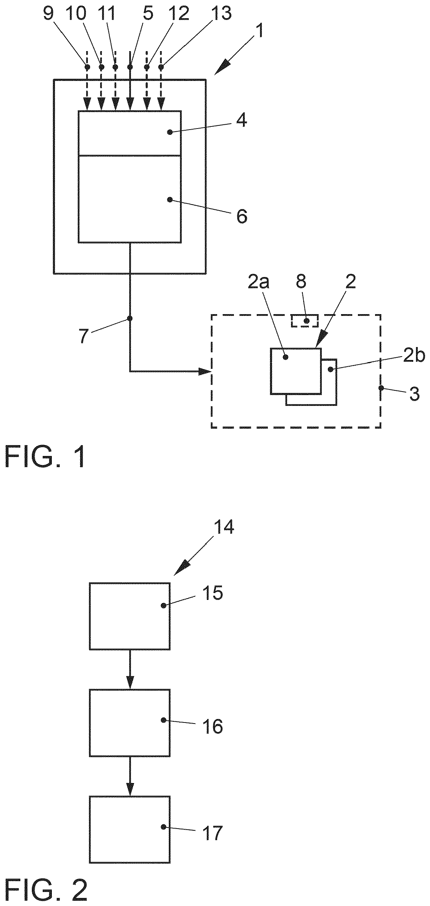

Fig. 1 zeigt eine schematische Darstellung einer Ansteuereinrichtung 1 zum Verändern einer Wiedergabe einer Mehrzahl von Anzeigebereichen 2 auf einer Anzeigefläche 3 gemäß einem Ausführungsbeispiel.

Dabei überlappt ein erster Anzeigebereich 2a einen in einem Vordergrund einen zweiten Anzeigebereich 2b in einem Hintergrund zumindest teilweise. Jedem der Anzeigebereiche 2 ist jeweils eine Information zu einem möglichen Ziel zugeordnet. Die Ansteuereinrichtung 1 umfasst eine Eingangseinrichtung 4. Die Eingangseinrichtung 4 dient zum Empfangen eines Speichersignals 5. Das Speichersignal 5 korrespondiert zu einer vorbestimmten Auswahlgeste eines Benutzers. Die Ansteuereinrichtung 1 besitzet auch einen Controller 6. Der Controller 6 ist ausgebildet, um ansprechend auf das Speichersignal 5 ein Anzeigesignal 7 zu erzeugen. Das Anzeigesignal 7 bewirkt eine Anzeige des zweiten Anzeigebereichs 2b in einem Vordergrund und eine Anzeige eines zu der Information des ersten Anzeigebereichs 2a korrespondierenden, gestrichelt dargestellten, Hinweisfeldes 8 auf der Anzeigefläche 3. Eine Anzeige des Hinweisfelds 8 wird dabei außerhalb eines Bereichs der Mehrzahl der Anzeigebereiche 2 bewirkt.

Die Eingangseinrichtung 4 kann mit dem Controller 6 verbunden bzw. verkoppelt sein. Ggf. kann die Eingangseinrichtung 4 eine Eingangsschnittstelle des Controllers 6 sein. Alternativ kann die Eingangseinrichtung 4 mit dem Controller 6 über einen Leiter verbunden sein. Beispielsweise können die Eingangseinrichtung 4 und der Controller 6 auf einer gemeinsamen Leiterplatte, einem Chip oder einer Platine angeordnet sein.

Optional kann die Eingangseinrichtung 4 bei dem Ausführungsbeispiel der Fig. 1 ausgebildet sein, um ein Aufrufsignal 9 zu empfangen. Das Aufrufsignal 9 korrespondiert zu einer weiteren Auswahlgeste des Benutzers. Der Controller 6 kann ausgebildet sein, um das Anzeigesignal 7, ansprechend auf das Aufrufsignal 9 so zu verändern, dass eine Wiedergabe des ersten Anzeigebereichs 2a, zu dem das Hinweisfeld 8 korrespondiert, bewirkt wird. Es kann also der Anzeigebereich 2a, nachdem er in einen Zwischenspeicher geschoben wurde von dem Benutzer wieder aufgerufen werden.

Die Eingangseinrichtung 4 kann ebenfalls ausgebildet sein, um ein Löschsignal 10 zu empfangen. Das Löschsignal 10 korrespondiert zu einer weiteren Auswahlgeste eines Benutzers. Der Controller 6 kann dann ausgebildet sein, um das Anzeigesignal 7, ansprechend auf den Empfang des Löschsignals 10, so zu verändern, dass eine Anzeige des zweiten Anzeigebereichs 2b in den Vordergrund bewirkt wird und der erste Anzeigebereich 2a gelöscht wird. In diesem Fall wird also kein Hinweisfeld erzeugt, das auf den Anzeigebereich 2a verweist.

Ergänzend oder alternativ kann die Eingangseinrichtung 4 ausgebildet sein, um ein Zielsignal 11 zu empfangen. Das Zielsignal 11 umfasst eine Information zu einer Mehrzahl von möglichen Zielen. Der Controller 6 kann dann ausgebildet, um das Anzeigesignal 7 so zu erzeugen, dass die Anzeigebereiche 2 basierend auf dem Zielsignal 11 angezeigt werden. Ergänzend oder alternativ kann die Eingangseinrichtung 4 auch ausgebildet sein, um ein Temperatursignal 12 zu empfangen. Das Temperatursignal 12 umfasst eine Information über eine Temperatur. Die Anzeigebereiche 2 können basierend auf der Information über das Temperatursignal angezeigt werden. Die Information über die Temperatur kann also beispielsweise einen Filter zur Anzeige der möglichen Ziele darstellen. Die Information über die Temperatur kann ggf. über ein Kfz-Bordnetz bereitgestellt werden.

Ergänzend oder alternativ kann die Eingangseinrichtung 4 ausgebildet sein, um ein Umgebungssignal 13 zu empfangen. Das Umgebungssignal 13 umfasst eine Information über eine Umgebung. Der Controller 6 kann ausgebildet sein, um das Anzeigesignal 7 so zu erzeugen, dass die Anzeigebereiche 2 basierend auf einer Information des Umgebungssignals 13 angezeigt werden. Beispielsweise kann das Umgebungssignal 13 eine Information zu einem Standort eines Benutzers umfassen. Diese Information kann beispielsweise von einem GPS-Bordnetz bereit gestellt werden.

Fig. 2 zeigt eine schematische Darstellung eines Verfahrens zum Verändern einer Wiedergabe einer Mehrzahl von Anzeigebereichen auf einer Anzeigefläche gemäß einem Ausführungsbeispiel.

Wie in Fig. 2 dargestellt, wird bei einem Verfahren 14 zum Verändern einer Wiedergabe einer Mehrzahl von Anzeigebereichen 2 auf einer Anzeigefläche 3 in einem Vorgang 15 eine Mehrzahl von Anzeigebereichen 2 angezeigt. Dabei wird ein erster Anzeigebereich 2a in einem Vordergrund angezeigt, der einen zweiten Anzeigebereich 2b in einem Hintergrund teilweise überlappt. Jedem der Anzeigebereiche 2 ist jeweils eine Information zu einem möglichen Ziel zugeordnet. In einem weiteren Vorgang 16 wird ein Speichersignal 5 empfangen, das zu einer vorbestimmten Auswahlgeste eines Benutzers korrespondiert. Ferner wird in einem Vorgang 17 ein Anzeigesignal 7 erzeugt, ansprechend auf das Speichersignal 5. Das Anzeigesignal 7 bewirkt eine Anzeige des zweiten Anzeigebereichs 2b in dem Vordergrund und eine Anzeige eines zu der Information des ersten Anzeigebereichs korrespondierenden Hinweisfeldes 8. Das Hinweisfeld 8 wird in einem Bereich außerhalb der Anzeigebereiche 2 auf der Anzeigefläche 3 angezeigt.

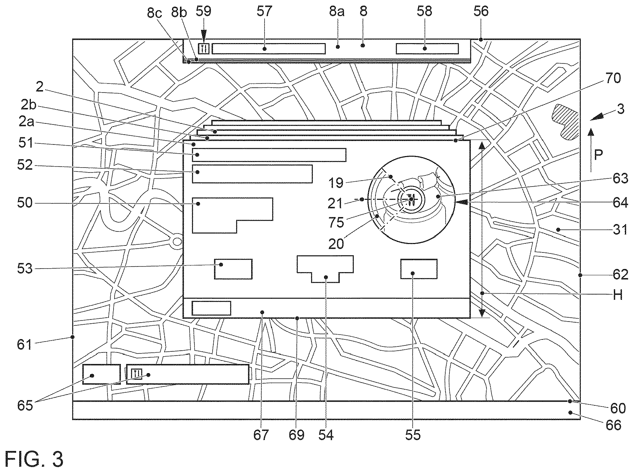

Fig. 3 zeigt eine schematische Darstellung einer Wiedergabe auf einer Anzeigefläche gemäß einem Ausführungsbeispiel in einer einfachen Ansicht (z.B. von einer Grundeinstellung einer Anzeige oder Default von engl.: "Standard").

Wie in Fig. 3 gezeigt, wird eine Mehrzahl von Anzeigebereichen 2 vor dem Hintergrund eines Kartenausschnitts 31 angezeigt. Dabei ist ein erster Anzeigebereich 2a in einem Vordergrund angezeigt, sodass er einen zweiten Anzeigebereich 2b in einem Hintergrund teilweise überlappt. Die vorderste Karteikarte bzw. der Anzeigebereich 2a ist in dem Vordergrund fixiert. Der zweite Anzeigebereich 2b überlappt einen dritten Anzeigebereich. Mit anderen Worten ausgedrückt, sind die Anzeigebereiche 2 als Karteikarten, die übereinander als Stapel angeordnet sind, dargestellt. Beispielsweise kann ein Kartenausschnitt 31 auf jedwede Art und Weise wiedergegeben werden. Beispielsweise kann der Kartenausschnitt 31 als Landkarte, Satellitendarstellung, 3D-Darstellung wiedergegeben werden. Beispielsweise können die Anzeigebereiche 2 nach einer Entfernung der Ziele, denen sie zugeordnet sind, sortiert sein. Beispielsweise können weitere Ziele als weitere Anzeigebereiche, die zwischen die bereits angezeigten Anzeigebereiche geschoben werden, hinzugefügt werden.

Jedem der Anzeigebereiche 2 ist eine Information zu einem möglichen Ziel oder einem Point of Interest zugeordnet. Ein Teil der Information, die dem Anzeigebereich 2 zugeordnet ist, kann in dem Anzeigebereich 2 dargestellt oder wiedergegeben sein. Bei dem Anzeigebereich 2a wird in einem Textfeld 50 ein Name des Ziels (z.B.: "JORIS BISTRO") oder Point of Interest wiedergegeben. In einem weiteren Adresstextfeld 51 wird eine Adresse des Ziels (z.B.: "Brunnenstraße 158, 17115 Berlin") wiedergegeben. In einem Entfernungsanzeigefeld 52 wird eine Entfernung (z.B.: "1236 METER") zu dem Ziel angegeben. Bei der Entfernung kann es sich dabei um einen Abstand von einem Standpunkt des Benutzers bis zu dem Ziel handeln. Dabei kann der Standpunkt beispielsweise ein tatsächlicher Standpunkt des Benutzers sein. Alternativ kann der Standpunkt auch ein von dem Benutzer gewählter virtueller Standpunkt sein. In einem Bewertungsfeld 53 wird eine Information über eine Bewertung des Ziels wiedergegeben. Dazu kann beispielsweise ein Wert (z.B.: "8.5") angezeigt werden. Frühere Besucher des Ziels können beispielsweise eine Bewertung des Ziels vorgenommen haben.

Der Anzeigebereich 2a weist auch ein Besucherfeld 54 auf. Dieses zeigt eine Anzahl von Besuchern an, die das Ziel bereits besucht haben. Ferner weist der Anzeigebereich 2a bei dem Ausführungsbeispiel der Fig. 3 ein weiteres Besucherfeld 55 auf. Dieses gibt eine Anzahl der Personen wieder, die sich aktuell an diesem Ziel aufhalten.

Bei einigen weiteren, nicht dargestellten Ausführungsbeispielen können in dem Anzeigebereich jedwede andere Information oder Kombination der genannten Felder dargestellt sein. Bei einigen weiteren, nicht dargestellten Ausführungsbeispielen kann auf der Anzeigefläche eine Information zu einer empfangenen GPS-Signalstärke dargestellt werden.

Wenn ein Benutzer einen Anzeigebereich 2a zu einem Ziel gesehen hat, kann er den Anzeigebereich 2a mit einer Auswahlgeste in einem Zwischenspeicher ablegen. Dazu kann der Benutzer den Anzeigebereich 2a bzw. die Karteikarte in Pfeilrichtung P nach oben schieben. An einem oberen Rand 56 der Anzeigefläche 3 wird dann das Hinweisfeld 8 eingeblendet. Das Hinweisfeld 8 korrespondiert zu der Information, die dem Anzeigebereich 2a, der über die Bewegung in Pfeilrichtung P in Richtung des oberen Rands geschoben wurde, zugeordnet ist. Bei dem Ausführungsbeispiel der Fig. 3 umfasst das Hinweisfeld 8 ein Textfeld 57. Das Textfeld 57 weist den Namen des Ziels auf, der dem Anzeigebereich 2a zugeordnet ist, der zu dem Hinweisfeld 8 korrespondiert. Wenn das Hinweisfeld 8 zu einer Mehrzahl von Anzeigebereichen 2 korrespondiert, kann das Textfeld 57 den Namen des Ziels aufweisen, der zu dem Anzeigebereich 2a korrespondiert, der als letztes in dem Zwischenspeicher abgelegt wurde. Alternativ kann das Textfeld 57 auch den Namen des Ziels aufweisen, das die geringste oder größte Entfernung zu dem aktuellen oder virtuellen Standort des Benutzers aufweist. Ferner weist bei dem Ausführungsbeispiel der Fig. 3 das Hinweisfeld 8 ein weiteres Entfernungstextfeld 58 auf. Das Entfernungstextfeld 58 umfasst eine Information zu einer Entfernung zwischen dem Standpunkt und dem Ziel. Dabei kann die Information zu der Entfernung eine Strecke oder eine Zeitdauer sein, die ein Benutzer benötigt, um das Ziel zu erreichen. Das Hinweisfeld 8 weist auch ein Informationsfeld 59 auf. Informationsfeld 59 kann eine weitere Information zu dem Ziel umfassen, zu dem das Hinweisfeld 8 korrespondiert. Beispielsweise kann das Informationsfeld 59 einen Hinweis zu einer Kategorie, der das Ziel zugeordnet ist, umfassen.

Bei dem Ausführungsbeispiel der Fig. 3 umfasst das Hinweisfeld 8 ein erstes Teilhinweisfeld 8a in einem Vordergrund, das ein zweites Teilhinweisfeld 8b in einem Hintergrund zumindest teilweise überlappt. Das Teilhinweisfeld 8b überlappt ein drittes Teilhinweisfeld 8c. Bei dem Ausführungsbeispiel der Fig. 3 wird also der Eindruck erweckt, dass die Anzeigebereiche 2, die in dem Zwischenspeicher abgelegt worden sind, auf einem Stapel liegen, dessen untere Kante an dem oberen Rand 56 der Anzeigefläche dargestellt ist. Dadurch kann beispielsweise angezeigt werden, dass das das Hinweisfeld 8 zu der Information einer Mehrzahl von Anzeigebereichen 2 korrespondiert.

Wenn ein Benutzer einen Anzeigebereich 2a nicht in den Zwischenspeicher an den oberen Rand 56 der Anzeigefläche 3 schieben möchte, kann er den Anzeigebereich 2a mit einer Bewegung, die der Pfeilrichtung P entgegengerichtet ist, löschen. Die Bewegung kann also zu einem unteren Bildrand 60 gerichtet sein. Dann verschwindet beispielsweise der Anzeigebereich 2a, der in dem Vordergrund angezeigt wird und der Anzeigebereich 2b wird in dem Vordergrund angezeigt.

Mit anderen Worten ausgedrückt, bietet die Ansteuereinrichtung 1 die Möglichkeit viele Ziele bzw. Points of Interest als Anzeigebereich 2 auf einem Kartenausschnitt 31 darzustellen. Ferner können die Ziele oder Anzeigebereiche 2 in eine Zwischenablage oder einen Zwischenspeicher geschoben werden. Zur Bedienung der Anzeigefläche 3 kann der Benutzer den Anzeigebereich 2 bzw. die Karteikarte nach oben schieben (z.B.: Flick-Up von engl.: "nach oben Schieben") und für später archivieren. Beispielsweise können die Anzeigebereiche 2 so überlappend dargestellt werden, dass Anzeigebereiche 2 einer geringeren Entfernung in dem Vordergrund dargestellt werden. Diese Sortierung kann beispielsweise auch in der Zwischenablage beibehalten werden. Mit einer weiteren Bedienbewegung (z.B.: Flick-Down von engl.: "nach unten Schieben") kann die Karteikarte bzw. der Anzeigebereich 2 von der Anzeigefläche 3 ausgeblendet werden. Die Karteikarte verschwindet also von der Anzeigefläche 3 (z.B. Screen). Es kann eine automatische Ausblendung in einen Bildschirmschonermodus (v. engl.: "Screensaver-Modus") erfolgen. Ein Löschen kann beispielsweise nicht mehr rückgängig gemacht werden. Wenn der Benutzer die zwischengespeicherten Ziele bzw. Points of Interest bzw. Informationen, die zu dem Hinweisfeld 8 korrespondieren, sehen möchte, kann er diese über eine Auswahlgeste wieder aufrufen. Beispielsweise kann er dazu einfach eine Bedienbewegung in der Nähe des Hinweisfelds 8 ausführen. So kann der Benutzer beispielsweise einen Anzeigebereich 2, der zu dem Teilhinweisfeld 8a korrespondiert, wieder auf den Karteikartenstapel bzw. den Anzeigebereich 2 legen. Ferner kann der Benutzer, wenn er alle Anzeigebereiche 2, die in der Mitte des Kartenabschnitts 31 dargestellt sind, gesehen hat, sich alle zwischengespeicherten Anzeigebereiche ansehen.

Mit der Ansteuereinrichtung 1 wird also die Möglichkeit geboten, Points of Interest bzw. Ziele zu sortieren oder auszuwählen. Die Informationen können beispielswiese aus dem Internet, einem anderen Netzwerk, einem sozialen Netzwerk (z.B. Foursquare von engl.: "viereckig") oder einem Speichermedium stammen. Beispielsweise können über das Internet in einer Umgebung gefundene Ziele oder Points of Interest als Stapel dargestellt werden. Beispielsweise können Ziele oder Points of Interest in einem Zwischenspeicher abgelegt oder gelöscht werden. Die Ziele können auch wieder aus dem Zwischenspeicher abgeholt werden. Beispielsweise kann ein Benutzer eine gewisse Vorauswahl zum Darstellen der Ziele oder Points of Interest generieren. Der Benutzer kann dazu evtl. eine Kategorie auswählen. Eine Mehrzahl von Zielen kann einer bestimmten Kategorie zugeordnet sein. Zu jedem der Ziele können Informationen angezeigt werden. Diese Informationen können ggf. eine Adresse des Ziels, eine Information, wie viele Mitglieder eines Netzwerks sich aktuell an dem Ziel befinden bzw. den Point of Interest besuchen, wie viele Leute des gleichen Netzwerks den Point of Interest bereits besucht haben, eine Entfernung zu dem Ziel, ein Name des Ziels, eine Kategorie des Ziels, eine Bewertung des Ziels, eine gesamte Besucheranzahl (z.B. Check Ins, von engl.: "Registrierungen") und/oder eine Anzahl von Besuchern, die sich aktuell an dem Ziel befinden, sein.

Wenn der Benutzer den Anzeigebereich 2a zu einem anderen Ziel oder die Karte sehen möchte, den alten jedoch behalten möchte, kann er den Anzeigebereich 2a bzw. die Karteikarte mit einer Auswahlbewegung in die Zwischenablage schieben. Dazu kann er den Point of Interest bzw. den Anzeigebereich 2a beispielsweise nach oben schieben. Soll der Anzeigebereich 2a für diese Session bzw. das aktuelle Auswahlverfahren gelöscht werden, kann der Benutzer den Anzeigebereich 2a beispielsweise nach unten schieben. Bei manchen Ausführungsbeispielen können also die letzten angeschauten Orte bzw. Ziele oder Points of Interest (z.B. POI's) gespeichert und beispielsweise durch eine Wischgeste angezeigt werden. Ferner können die letzten angeschauten Orte bzw. Ziele oder Points of Interest auswählbar sein.

Bei einigen weiteren nicht dargestellten Ausführungsbeispielen kann die Auswahlgeste, um den Anzeigebereich 2a in den Zwischenspeicher zu schieben in jedwede Richtung führen. Beispielsweise könnte der Benutzer den Anzeigebereich 2a dazu zu einem linken Seitenrand 61 oder zu einem rechten Rand 62 oder zu einem unteren Rand 60 schieben. Beispielsweise könnte der Benutzer dazu den Anzeigebereich 2a auch in Richtung der Ecken der Anzeigefläche 3 schieben. Eine Bewegung, um den Anzeigebereich 2a zu löschen, könnte dann der entsprechenden Bewegung zum Speichern des Anzeigebereichs 2a entgegen gerichtet sein.

Wenn die Anzeigebereiche 2 bzw. Ziele oder Points of Interest über das Hinweisfeld 8 aus der Zwischenablage 8 abgeholt werden, können die Anzeigebereiche 2 in einer hier nicht illustrierten Art der Darstellung auch nebeneinander dargestellt werden. Die Anzeigebereiche 2 können dabei beispielsweise so weit wie möglich von links bzw. von rechts eingeblendet werden. So können beispielsweise neue Orte dazwischen hinzugefügt werden. Dabei können sich die Anzeigebereiche 2 dann ggf. nicht überlappen. Beispielsweise kann dies der Fall sein, wenn der Benutzer den ganzen Kartenstapel der Anzeigebereiche 2 durchgeblättert hat. Beispielsweise können die Anzeigebereiche 2 horizontal nebeneinander auf der Anzeigefläche 3 dargestellt werden. Bei einigen weiteren Ausführungsbeispielen können die Anzeigebereiche 2 in jedwedem Muster, nicht überlappend, auf der Anzeigefläche 3 dargestellt werden. Wenn beispielsweise die Anzeigefläche 2 nicht ausreicht, um alle zwischengespeicherten Anzeigebereiche 2 oder Ziele auf der Anzeigefläche 3 darzustellen, können diese beispielsweise horizontal oder vertikal verschoben werden.

Ferner wird auf der Anzeigefläche 3 ein Filterfeld 65 dargestellt ist. Dieses zeigt an, welchen Filter der Benutzer zur Auswahl der Anzeigebereiche 2 oder der Ziele der Anzeigebereiche 2 gewählt hat. Der Filter kann beispielsweise eine Kategorie sein. Die Kategorie kann ggf. über ein Icon (von engl.: "Bildzeichen") auswählbar sein. Unter Umständen kann das Icon eine Information anzeigen, die wiedergibt, welche Ziele über dieses Icon angezeigt werden können. Das Icon kann dazu einen Text umfassen. Der Text kann z. B. "Ich möchte nur Gaststätten angezeigt bekommen" lauten. Ferner kann der Text anstelle der Kategorie "Gaststätte" einen Namen einer anderen Kategorie beinhalten. Das Icon kann ggf. auch ein später noch beschriebener Kategorieauswahlbereich 34 sein.

Beispielsweise kann als Filter auch eine bestimmte Zeitdauer gewählt werden, innerhalb der die angezeigten Ziele (z.B.: 10 min) erreichbar sein sollen. Ferner kann das Filterfeld 65 auch die Zeitdauer, in der die angezeigten Ziele erreichbar sein sollen, anzeigen. Beispielsweise können solche Auswahlkriterien kombiniert sein. Beispielsweise können Ziele einer bestimmten Kategorie, die sich innerhalb einer bestimmten Zeitdauer erreichen lassen, als Filter gesetzt sein. Diese gewählten Filterkriterien können beispielsweise in dem Filterfeld 65 zur Information des Benutzers dargestellt werden. Beispielsweise ist die Entfernung zu dem Ziel durch den Benutzer in einer Zeit oder in einer Strecke wählbar. Dadurch, dass der Benutzer eine Zeit angeben kann, kann bei manchen Ausführungsbeispielen ermöglicht werden, dass der Benutzer die tatsächliche Zeit, die benötigt wird um die Ziele zu erreichen, direkt vergleichen kann. Beispielsweise kann das Filterfeld 65 in der Nähe eines unteren Bildrands 60 angezeigt werden.

Andere Filtermöglichkeiten können beispielsweise eine aktuelle Temperatur sein. Beispielsweise kann die Ansteuereinrichtung dazu Informationen zur Temperatur erhalten. Beispielsweise werden unter einer bestimmten Grenztemperatur keine Ziele angezeigt, die eine Eisdiele, ein Freibad oder dergleichen sind. Weitere Filtermöglichkeiten können ggf. auch eine Zeit, beispielsweise eine Tageszeit oder eine Jahreszeit bzw. ein Datum sein. Die Ziele können also bei manchen Ausführungsbeispielen tageszeitabhängig oder jahreszeitabhängig gefiltert werden. Zum Beispiel wird dann im Winter kein Freibad oder tagsüber kein Theater als Ziel angezeigt. Ergänzend oder alternativ werden ggf. keine Freizeitparks als Ziele angezeigt, wenn ein Benutzer beruflich unterwegs ist.

Ferner kann auf der Anzeigefläche 3 eine Statusleiste 66 angezeigt werden. Beispielsweise kann auf der Statusfläche 66 ein Name und eine Adresse des Ziels, das dem Anzeigebereich 2a in dem Vordergrund zugeordnet ist, angegeben sein.

Der Anzeigebereich 2a kann einen Informationsbereich 67 aufweisen. Beispielsweise kann der Benutzer über den Informationsbereich 67 weitere Informationen oder Tipps zu dem Ziel aufrufen. Beispielsweise kann der Informationsbereich 67 ein Textfeld aufweisen, in dem angegeben wird, wie viele weitere Informationen oder Tipps zu dem Ziel des obersten Anzeigebereichs 2a vorhanden sind. Beispielsweise können diese Tipps von anderen Benutzern oder Usern (von engl.: "Benutzer") des Netzwerks stammen.

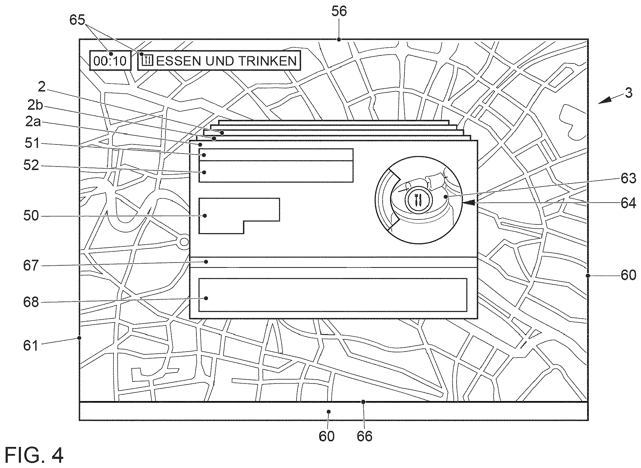

Wenn ein Benutzer über eine Bedienbewegung an dem Informationsbereich 67 diese Tipps aufruft, erfolgt eine Wiedergabe der Anzeigefläche 3, wie in Fig. 4 dargestellt. Zum Einblenden der Tipps kann der Benutzer beispielsweise einen unteren Bereich des Anzeigebereichs 2a berühren (z.B. Single-Tab, von engl.: "einfach Berühren" von auf der Karteikarte). Beispielsweise kann dieser Bereich 1/3 einer Höhe des Anzeigebereichs 2a einnehmen, von einem unteren Rand 69 des Anzeigebereichs 2a aus.

Fig. 4 zeigt eine schematische Darstellung einer Wiedergabe auf einer Anzeigefläche gemäß einem weiteren Ausführungsbeispiel.

Wie in Fig. 4 gezeigt, sind nach dem Aufrufen der Tipps in dem Anzeigebereich 2a nur noch das Textfeld 50 mit dem Namen des Ziels und das Adresstextfeld 51 und das Entfernungsanzeigefeld 52 und die Richtungsangabe 64 eingeblendet. Mit anderen Worten ausgedrückt, kann der Anzeigebereich 2a vereinfacht dargestellt sein. Dabei kann das Entfernungsanzeigefeld 52 vergrößert dargestellt sein. In einem Tippfeld 68 kann beispielsweise eine Empfehlung oder ein Kommentar eines Benutzers zu dem Ziel angezeigt sein. Mit anderen Worten ausgedrückt, lassen sich die Tipps also optional einblenden. Dabei kann dann ein sogenannter Bildschirmschonermodus unterbrochen werden. Wenn eine Mehrzahl solcher Tipps oder Tippfelder vorhanden sind, können diese beispielsweise durch eine Bedienbewegung aufgerufen werden. Beispielsweise kann die Bedienbewegung von einem rechten Rand 60 der Anzeigefläche 3 zu einem linken Rand 61 der Anzeigefläche 3 verlaufen. Es kann also in einem Bereich des Tippfeldes 68 beispielsweise per Swipe (von. engl.: "Schieben") geblättert werden. Alternativ kann die Bedienbewegung in die entgegengerichtete Richtung ausgeführt werden.

Beispielsweise kann, wenn an dem Anzeigebereich 2a in die sogenannte Tippansicht der Fig. 4 gewechselt wird, das Filterfeld 65 an einer anderen Position dargestellt werden. Bei der Fig. 3 ist das Filterfeld 65 in der Nähe eines unteren Bildrands 60 angezeigt. Bei der Fig. 4 ist das Filterfeld 65 in der Nähe eines oberen Anzeigerandes 56 dargestellt.

Der Benutzer kann beispielsweise eine Kategorie über eine Bedienbewegung in einem Bereich des Filterfelds 65 wählen. Beispielsweise kann mit einem Tap (von engl.: "Berühren"; z.B. einer kurzen Berührung) auf das Filterfeld 65 eine Kategorie oder Filtereinstellung aufgerufen werden. Analog kann der Benutzer eine Entfernung ebenfalls über einen Tap auf das Filterfeld auswählen. Ein Tap auf das Filterfeld 65 kann also beispielsweise zu einer anderen Kategorie bzw. einer Entfernung, in der die Ziele des angezeigten Anzeigebereichs 2 liegen, führen.

Ferner kann ein Benutzer einen Anzeigebereich 2a mit einer weiteren Auswahlgeste (z.B.: Single-Tab, also eine einfachen Berührung) für andere Bereiche oder Funktionen nutzen bzw. zur Verfügung stellen. Beispielsweise kann der Anzeigebereich 2a dann in einer Fotogalerie abgelegt werden, zum Teilen in einem Netzwerk oder zum Ablegen in einem anderen Speicher verwendet werden. Dazu kann sich die Karte bzw. der Anzeigebereich 2a beispielsweise drehen. So könnte beispielsweise markiert werden, dass der Anzeigebereich 2a für diese andere Funktion verwendet wird. Beispielsweise kann diese Bedienbewegung in einem oberen Bereich des Anzeigebereichs erfolgen. Dieser Bereich kann ca. 2/3 einer Höhe H des Anzeigebereichs 2a einnehmen.

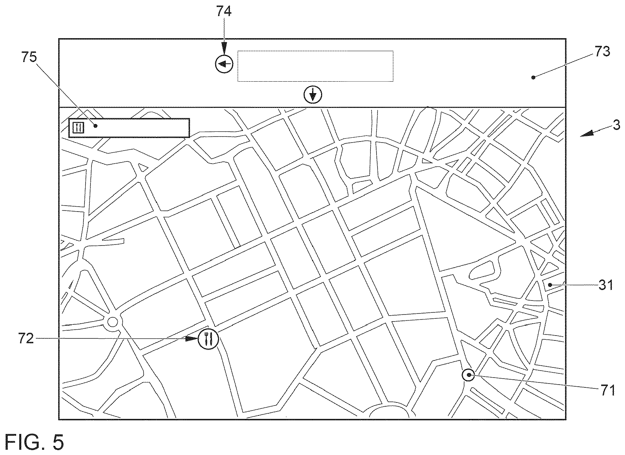

Durch eine Bedienbewegung in dem Bereich der Navigationsleiste 66 kann eine Navigationsanzeige wie in Fig. 5 gezeigt, aufgerufen werden. Die Navigation kann zu dem Ziel, das dem Anzeigebereich 2a in dem Vordergrund zugeordnet ist, generiert werden.

Fig. 5 zeigt eine schematische Darstellung einer Wiedergabe auf einer Anzeigefläche gemäß einem weiteren Ausführungsbeispiel.

Wie in Fig. 5 gezeigt, wird auf dem Kartenausschnitt 31 ein aktueller Standpunkt 71 des Benutzers angezeigt. Es ist auch ein Ziel 72 markiert. Dabei handelt es sich um eine Position des Ziels 72, das dem Anzeigebereichs 2a zugeordnet ist. In einem oberen Bereich der Anzeigefläche 3 können in einer Statusleiste 73 eine Entfernung in Metern zu dem Ziel 72 und eine Adresse des Ziels 72 angegeben sein.

Ferner kann mit einem Pfeilsymbol 74 eine Richtung, in der sich das Ziel 72 von dem Standpunkt 71 des Benutzers aus befindet, angegeben werden. Mit anderen Worten ausgedrückt kann in einem oberen Bereich die Entfernung als spätere Angabe für die Navigation eingeblendet werden. Das Pfeilsymbol 74 befindet sich ebenfalls in der Statusleiste 73. Auf dem Kartenausschnitt 31 ist in einem Textfeld 75 ein Name des Ziels 72 und ggf. eine Kategorie des Ziels 72 eingeblendet.

Bei einigen weiteren, nicht dargestellten Ausführungsbeispielen kann auf einzelne dieser Angaben verzichtet werden. Ferner können andere Angaben eingeblendet sein.

Dann kann eine sprach-, text- oder symbolbasierte Navigationsanleitung von dem Standpunkt 71 des Benutzers zu dem Ziel 72 erfolgen. Es kann also eine Navigation zu dem Ziel 72, das zu dem aktuellen Anzeigebereich 2 korrespondiert, angezeigt werden. Beispielsweise kann der Kartenausschnitt 31 für die Navigation vergrößert und/oder verkleinert (z.B. gezoomt) werden. So könnten beispielsweise die aktuelle Position 71 und das Ziel 72 besser erkannt werden. Die Angaben zu der Navigation können beispielsweise von unten eingeblendet werden. Bei dem Ziel 72 handelt es sich um das Ziel, das dem obersten Anzeigebereich 2a aus der Ansicht der Fig. 3 zuvor zugeordnet ist. Es handelt sich also um das Ziel 72 der aktiven Karteikarte aus der vorhergehenden Ansicht.

Der Anzeigebereich 2a weist auch eine Richtungs- und/oder Entfernungsanzeige 64 auf. Diese korrespondiert zu einem Ziel, das dem Anzeigebereich 2a zugeordnet ist. Der Anzeigebereich weist ebenfalls ein Bild 63 auf, das zu dem Ziel des Anzeigebereichs korrespondiert. Die Richtungs- und Entfernungsanzeige 64 ist vor dem Hintergrund des Bildes 63 dargestellt.

Bei einigen weiteren Ausführungsbeispielen kann die Richtungs- und Entfernungsanzeige 64 unabhängig von dem Bild 63 bzw. das Bild 63 unabhängig von der Richtungs- und Entfernungsanzeige 64 angezeigt werden. Die Ziele bzw. Points of Interest können also bei manchen Ausführungsbeispielen mit einem Bild oder Foto geladen und angezeigt werden.

Die auf dem Anzeigebereich 2a wiedergegebene Richtungs- und Entfernungsanzeige 64 zeigt auf optisch einfache Art und Weise eine Richtung und eine Entfernung, in der das Ziel 72 von einem Standpunkt eines Benutzers aus gesehen liegt. Dazu weist die Richtungs- und Entfernungsanzeige 64 einen Bogenabschnitt 20 auf. Bei dem Ausführungsbeispiel der Fig. 3 ist der Bogenabschnitt 20 ein Kreisbogenabschnitt.

Bei weiteren nicht dargestellten Ausführungsbeispielen kann der Bogenabschnitt auch als Ellipsenbogenabschnitt ausgebildet sein.

Der Bogenabschnitt 20 überdeckt einen Winkelbereich 19. Der Winkelbereich 19 korrespondiert zu einer Entfernung des Ziels 72. Je größer der Winkelbereich 19 ist, desto größer ist die Entfernung zu dem Ziel 72. Dabei kann eine maximale Entfernung einem Winkelbereich von 180° entsprechen. Eine Position der Mittelachse 21 des Winkelbereichs 19 entspricht einer Richtung, in der das Ziel 72 liegt. Dadurch, dass der Winkelbereich 19 bei einer größeren Entfernung größer ist, kann für einen Benutzer bei manchen Ausführungsbeispielen auch die Richtungsangabe nicht so genau erscheinen. Wenn sich der Benutzer dem Ziel 72 nähert, verkleinert sich der Winkelbereich 19. Dadurch kann die Richtungsangabe bei manchen Ausführungsbeispielen genauer erscheinen, weil die Mittelachse 21 in dem kleineren Winkelbereich 19 liegt.

Bei einigen weiteren, nicht dargestellten Ausführungsbeispielen kann der Winkelbereich auch so zu der Entfernung korrespondieren, dass je größer der Winkelbereich ist, desto kleiner ist die Entfernung zu dem Ziel.

Der Bogenabschnitt 20 wird vor dem Hintergrund des Bildes 63 angezeigt, das zu dem Ziel 72 das dem Anzeigebereich 2 zugeordnet ist, korrespondiert. Beispielsweise kann das Bild ein Foto des Ziels sein. Ferner wird an einem Mittelpunkt 57 des Bogenabschnitts 20 eine Information zu der Kategorie, zu der das Ziel 72 gehört, angezeigt. Der Bogenabschnitt 20 ist konzentrisch zu dem kreisscheibenförmigen Bild 63 angeordnet. Das Bild 63 wird in dem Bereich des Winkelabschnitts 19 bzw. in einem Kreisringabschnitt im Bereich des Winkelbereichs 19 in einem anderen Kontrast dargestellt als außerhalb des Winkelbereichs 19. So könnte Bogenabschnitt 20 für den Benutzer besser erkennbar sein.

Bei einigen weiteren, nicht dargestellten Ausführungsbeispielen kann der Bogenabschnitt auch vor jedwedem anderen Hintergrund dargestellt sein.

Beispielsweise kann sich die Größe des Winkelbereichs 19 linear zu der Entfernung verhalten. Ferner können eine Mehrzahl von Entfernungen einem Winkelbereich 19 zugeordnet sein. So könnten beispielsweise sehr große Entfernungen mit einem Winkelbereich 19 dargestellt werden, der etwas kleiner als 180° ist. Kleinere Entfernungen könnten dann in feineren Abstufungen dargestellt werden. Beispielsweise kann die Entfernung, zu der der Winkelbereich 19 korrespondiert, eine Zeitangabe einer Zeit sein, in der für einen Benutzer, z.B. bei Berücksichtigung der momentanen Verkehrslage, das Ziel erreichbar ist.

Bei einigen weiteren Ausführungsbeispielen ist die Wiedergabe der Richtungs- und Entfernungsanzeige 64 nicht auf den Anzeigebereich beschränkt. Beispielsweise kann die Richtungs- und Entfernungsanzeige 64 in einer Vielzahl von Anwendungen, beispielsweise Routenplanern und Navigationsgeräten eingesetzt werden.

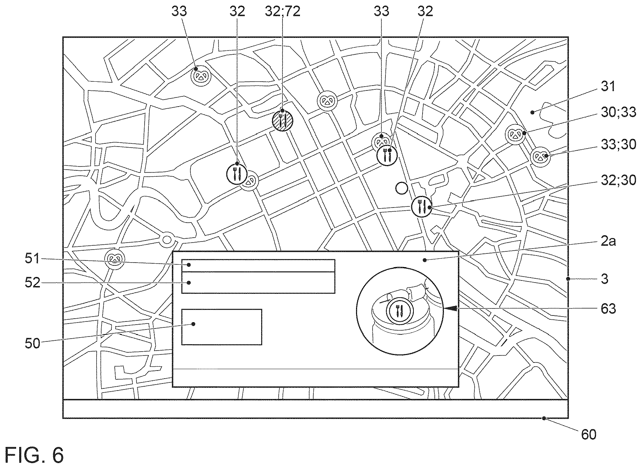

Mit einer weiteren Bedienbewegung, beispielsweise einem zweifachen Berühren (z.B.: Doppelklick, Doppel-Tap) des obersten Anzeigebereichs 2a kann eine Wiedergabe auf der Anzeigefläche 3, wie in Fig. 6 dargestellt, erfolgen.

Fig. 6 zeigt eine schematische Darstellung einer Wiedergabe auf einer Anzeigefläche gemäß einem weiteren Ausführungsbeispiel. Bei der in Fig. 6 dargestellten Anzeige, kann es sich um eine sogenannte erweiterte Ansicht handeln.

Bei der in Fig. 6 gezeigten Wiedergabe auf der Anzeigefläche 3 ist der Anzeigebereich 2a verkleinert und in Nähe eines unteren Rands 60 der Anzeigefläche 3 dargestellt. Das Ziel 72, das zu dem Anzeigebereich 2a korrespondiert, ist in dem Kartenausschnitt 31 markiert dargestellt.

Bei weiteren nicht dargestellten Ausführungsbeispielen kann der Anzeigebereich in normaler Größer und an jedweder anderen Position der Anzeigefläche dargestellt sein. Beispielsweise kann der Anzeigebereich so angezeigt werden, dass er das Ziel, zu dem er korrespondiert, nicht verdeckt.

Ferner sind in dem Kartenausschnitt 31 auch andere Ziele 30, die der gleichen Kategorie wie das Ziel 72 zugeordnet sind, eingeblendet. Diese Ziele 30 sind sogenannte Primärziele 32. Ergänzend werden auf dem Kartenausschnitt 31 auch sogenannte Sekundärziele 33 eingeblendet. Bei den Sekundärzielen 33 handelt es sich um Ziele, die einer anderen Kategorie als der gewählten zugeordnet sind. Mit anderen Worten ausgedrückt sind die Sekundärziele 33 einer anderen Kategorie als das Ziel 72 des Anzeigebereichs 2a zugeordnet.

Die Darstellung der Sekundärziele 33 unterscheidet sich von der Darstellung der Primärziele 32. Dies kann beispielsweise durch Symbole erfolgen, die sich unterscheiden. Ferner kann eine farbliche Markierung unterschiedlich sein. Ferner können sich die Markierungen beispielsweise durch unterschiedliche Schraffuren unterscheiden. Bei dem Ausführungsbeispiel der Fig. 6 können die Sekundärziele 33 nur schwarz-weiß oder nur grau markiert sein. Die Primärziele 32 können beispielsweise farbig hervorgehoben werden. Das aktuelle Primärziel 72, das zu dem Anzeigebereich 2a korrespondiert, kann in einer anderen Farbe als die anderen Primärziele 32 markiert sein. Bei dem Ausführungsbeispiel der Fig. 6 sind alle Ziele der Kategorie Essen zugeordnet. Einer Kategorie können beispielsweise eine Mehrzahl von Subkategorien oder zumindest ein Ziel zugeordnet sein. Alle Primärziele 32 können beispielsweise mit dem gleichen Symbol markiert sein. Bei dem Ausführungsbeispiel der Fig. 6 zeigt das Symbol eine Gabel und ein Messer. Dadurch kann beispielsweise erkennbar sein, dass alle Primärziele einer Kategorie, beispielsweise der Subkategorie Restaurant, zugeordnet sind. Die Sekundärziele 33 sind mit anderen Symbolen, beispielsweise einer Brezel, markiert. Dadurch kann bei manchen Ausführungsbeispielen erkennbar sein, dass diese einer anderen Subkategorie, beispielsweise bayrischem Essen zugeordnet sind.

Mit anderen Worten ausgedrückt, kann beispielsweise bei einer einfachen Berührung (z.B.: einem Tap) auf die Anzeigefläche 3 bzw. den Anzeigebereich 2a zu der erweiterten Ansicht der Fig. 6 gewechselt werden. Der Anzeigebereich 2a bzw. die Karteikarte wird dabei kleiner und verschiebt sich nach unten. Das Ziel 72 der aktiven Karteikarte bzw. des Anzeigebereichs 2a kann markiert hervorgehoben werden. Die Wiedergabe vergleichbarer Orte, also anderer Primärziele 32 der gleichen Kategorie, kann beispielsweise in grün erfolgen. Orte anderer Kategorien, also die Sekundärziele 33 können beispielsweise in grau angezeigt werden.

Bei einigen weiteren, nicht dargestellten Ausführungsbeispielen kann erst bei einer entsprechenden Auswahlgeste (z.B.: Tap auf ein Symbol oder Icon auf dem Anzeigebereich 2a) der Ort bzw. das Ziel 72 der Karteikarte angezeigt bzw. markiert werden. Mit einer weiteren Auswahlgeste eines Benutzers (z.B.: Tap auf den Anzeigebereich) kann beispielsweise zurück in die Ansicht der Fig. 3 gewechselt werden.

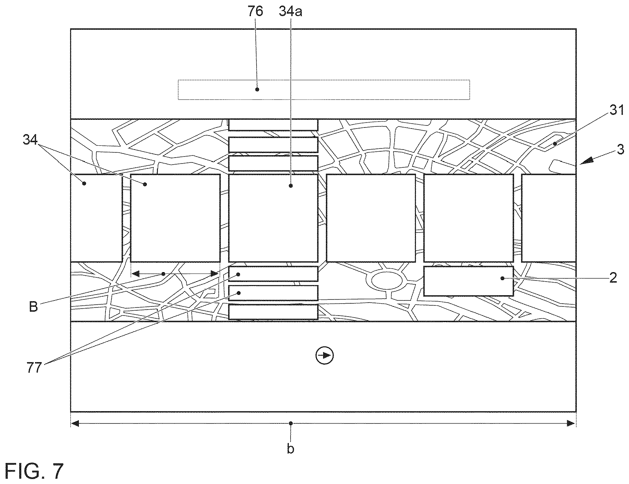

Fig. 7 zeigt eine schematische Darstellung einer Wiedergabe auf einer Anzeigefläche gemäß einem weiteren Ausführungsbeispiel. Diese dient zum Auswählen der Kategorien in der mögliche Ziele liegen sollen.

Wie in Fig. 7 dargestellt, ist auf der Anzeigefläche vor dem Hintergrund des Kartenabschnitts 31 eine Mehrzahl von Kategorieanzeigebereichen 34 dargestellt. Beispielsweise kann der Kartenabschnitt zu einem Standpunkt des Benutzers korrespondieren. Beispielsweise kann der Standpunkt des Benutzers in dem Kartenabschnitt liegen.

Bei weiteren, nicht dargestellten Ausführungsbeispielen können die Kategorieanzeigebereiche 34 auch vor einem Hintergrund, der kein Kartenabschnitt ist, angezeigt werden.

Beispielsweise kann ein Informationsfeld 76 eingeblendet werden. Dieses kann einen Hinweis an den Benutzer enthalten, eine Kategorie auszuwählen. Dieser Hinweis kann beispielsweise lauten: "Bitte wählen Sie eine oder mehrere Kategorien aus". Beispielsweise kann der Benutzer auch eine Mehrzahl von Kategorien auswählen. Die Kategorieauswahlbereiche 34 können horizontal nebeneinander angeordnet sein. Beispielsweise können die Kategorieauswahlbereiche 34 so angeordnet sein, dass sie sich nicht überlappen. Wenn eine Summe der Breiten B der Kategorieauswahlbereiche 34 eine Gesamtbreite b der Anzeigefläche 3 übersteigt, können diese beispielsweise mit einer Bedienbewegung über die Anzeigefläche 3 geschoben werden. Ferner kann beispielsweise jedem der Kategorieauswahlbereiche 34 eine Mehrzahl von Zielen 30 zugeordnet sein. Ferner kann einem Kategorieauswahlbereich 34a eine Mehrzahl von Subkategorieauswahlbereichen 77 zugeordnet sein. Jedem der Subkategorieauswahlbereiche 77 kann eine Mehrzahl von Zielen 30 zugeordnet sein. Beispielsweise kann eine Kategorie "Restaurant" sein. Beispielsweise kann eine Subkategorie eine Art des Essens sein, das in diesen Restaurants serviert wird.

Ferner kann bei der Anzeige der Fig. 7 auch ein Anzeigebereich 2 angezeigt werden. Diesem kann eine Information zu einem Ziel zugeordnet sein, das der Benutzer zuletzt besucht hat.

Mit anderen Worten ausgedrückt, bietet die Wiedergabe auf der Anzeigefläche 3 nach der Fig. 7 die Möglichkeit eine Vorauswahl zumindest einer Kategorie zu treffen. Beispielsweise können Hauptkategorien dabei horizontal und Subkategorien dabei vertikal angeordnet sein. Ferner kann ein Assistent für eine Entfernung angezeigt oder aufgerufen werden. Die Entfernung kann beispielsweise als eine Zeitdauer angegeben werden.

Zusammenfassen betreffen Ausführungsbeispiele eine Ansteuereinrichtung 1 zum Verändern einer Wiedergabe einer Mehrzahl von Anzeigebereichen 2 auf einer Anzeigefläche 3. Ein erster Anzeigebereich 2a in einem Vordergrund überlappt einen zweiten Anzeigebereich 2b in einem Hintergrund teilweise. Jedem der Anzeigebereiche 2 ist jeweils eine Information zu einem möglichen Ziel 30, 32, 33, 72 zugeordnet. Die Ansteuereinrichtung 1 umfasst eine Eingangseinrichtung 4 zum Empfangen eines Speichersignals 5. Das Speichersignal 5 korrespondiert zu einer vorbestimmten Auswahlgeste eines Benutzers. Ferner besitzt die Ansteuereinrichtung 1 auch einen Controller 6. Dieser ist ausgebildet, um ansprechend auf das Speichersignal 5 ein Anzeigesignal 7 zu erzeugen. Diese bewirkt eine Anzeige des zweiten Anzeigebereichs 2b in dem Vordergrund und eine Anzeige eines zu der Information des ersten Anzeigebereichs korrespondierenden Hinweisfeldes 8 außerhalb der Mehrzahl der Anzeigebereiche 2.

Ergänzend oder alternativ kann die Eingangseinrichtung 4 ausgebildet sein, um ein Eingangssignal mit einer Information zu einer Entfernung und einer Richtung zu einem Ziel 30, 23, 33 72 zu empfangen. Der Controller 6 kann ausgebildet sein, um ein Anzeigesignal zu erzeugen, das eine Darstellung eines einen Winkelbereich 19 überdeckenden Bogenabschnitts 20 auf der Anzeigefläche 3 bewirkt, wobei eine Größe des Winkelbereichs 10 zu der Information über die Entfernung und eine Position einer Mittelachse 21 des Winkelbereichs 19 zu der Information über die Richtung des Ziels 30, 23, 33 72 korrespondiert.

Gemäß einigen Ausführungsbeispielen ist der Controller 6 ausgebildet, um die Größe des Winkelbereichs 19 aus der Information über die Entfernung des Ziels 30, 23, 33 72 zu Berechnen.

Gemäß einigen Ausführungsbeispielen ist die Information zu der Entfernung eine Zeit. Ergänzend oder alternativ kann die Information zu der Entfernung eine Strecke sein.

Gemäß einigen Ausführungsbeispielen ist der Controller 6 ausgebildet, um eine Position der Mittelachse 21 aus einer Information über die Richtung des Ziels 30, 23, 33 72 zu Berechnen.

Gemäß einigen Ausführungsbeispielen ist der Controller 6 ausgebildet, um das Anzeigesignal so zu erzeugen, dass der Winkelbereich 19 bei einer ersten Entfernung, die kleiner ist als eine zweite Entfernung, kleiner ist als bei der zweiten Entfernung.

Gemäß einigen Ausführungsbeispielen ist der Controller 6 ausgebildet, um das Anzeigesignal so zu erzeugen, dass eine Größe des Winkelbereichs 19 linear zu einer Entfernung ist.

Gemäß einigen Ausführungsbeispielen ist der Controller 6 ausgebildet, um das Anzeigesignal so zu erzeugen, dass einer Mehrzahl von Entfernungen, die in einem Wertebereich liegen, zu einem Winkelbereich 19 einer Größe korrespondieren.

Gemäß einigen Ausführungsbeispielen ist der Controller 6 ausgebildet, um das Anzeigesignal so zu erzeugen, dass der Bogenabschnitt 20 auf einem Hintergrund angezeigt wird, von dem sich der Bogenabschnitt 20 abhebt.

Gemäß einigen Ausführungsbeispielen ist der Controller 6 ausgebildet, um das Anzeigesignal so zu erzeugen, dass der Hintergrund in dem Winkelbereich 19 zumindest teilweise anders dargestellt ist, als außerhalb des Winkelbereichs 19.

Gemäß einigen Ausführungsbeispielen ist der Controller 6 ausgebildet, um das Anzeigesignal so zu erzeugen, dass der Bogenabschnitt 20 konzentrisch zu einem äußeren Rand des Hintergrunds angeordnet ist.

Gemäß einigen Ausführungsbeispielen ist der Controller 6 ausgebildet, um das Anzeigesignal so zu erzeugen, dass die Richtungs- und Entfernungsanzeige vor dem Hintergrund eines Kartenausschnitts 31 angezeigt wird.

Einige Ausführungsbeispiele betreffen eine Vorrichtung mit einer Ansteuereinrichtung 1 nach einem der vorhergehenden Ausführungsbeispiele und einer Anzeigefläche 3, die eine Anzeige gemäß dem Anzeigesignal anzeigt.

Bei einigen weiteren Ausführungsbeispielen der Vorrichtung ist die Ansteuereinrichtung 1 ausgebildet, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu dem Ziel 32, 72 bewirkt.

Ergänzend oder alternativ kann bei dem Verfahren ein Richtungs- und Entfernungsanzeige 64 auf der Anzeigefläche 3 angezeigt werden. Dazu kann bei dem Verfahren das Eingangssignal empfangen werden. Das Eingangssignal kann eine Information zu einer Entfernung und einer Richtung zu einem Ziel 30, 23, 33 72 aufweisen. Ferner kann bei dem Verfahren das Anzeigesignal so erzeugt werden, dass das Anzeigesignal eine Darstellung eines einen Winkelbereich 19 überdeckenden Bogenabschnitts 20 auf der Anzeigefläche 3 bewirkt, wobei eine Größe des Winkelbereichs 19 zu der Information über die Entfernung und eine Position einer Mittelachse 21 des Winkelbereichs 19 zu der Information über der Richtung des Ziels 30, 23, 33 72 korrespondiert.

Einige Ausführungsbeispiele betreffen ein Computerprogramm zur Durchführung des Verfahrens nach zumindest einem der Ausführungsbeispiele, wenn das Computerprogramm auf einer programmierbaren Hardwarekomponente abläuft.

Ergänzend oder alternativ kann die Ansteuereinrichtung zum Markieren einer Mehrzahl möglicher Ziele 30, 23, 33, 72 in einem Kartenausschnitt 31 auf der Anzeigefläche 3 dienen. Dazu kann die Eingangseinrichtung 4 ausgebildet sein, um ein Kategorieauswahlsignal zu empfangen, das zu einer Auswahl eines Benutzers korrespondiert, wobei das Kategorieauswahlsignal eine Information über eine gewählte Kategorie möglicher Primärziele 32 umfasst. Ferner kann der Controller 6 ausgebildet sein, um ansprechend auf das Kategorieauswahlsignal ein Anzeigesignal zu erzeugen, welches eine Wiedergabe möglicher Primärziele 32 korrespondierend zu der Information der gewählten Kategorie und eine Wiedergabe von Sekundärzielen 33 zumindest einer anderen Kategorie in dem Kartenausschnitt 31 bewirkt, wobei sich die Darstellung der Primärziele 32 der gewählten Kategorie von der Darstellung der Sekundärziele 33 der anderen Kategorie unterscheidet.

Gemäß einigen Ausführungsbeispielen ist der Controller 6 ausgebildet, um das Anzeigesignal so zu erzeugen, dass eine Wiedergabe eines Anzeigebereichs 2 bewirkt wird, wobei dem Anzeigebereich 2 eine Information zu einem ausgewählten Primärziel 32, 72 zugeordnet ist.

Gemäß einigen Ausführungsbeispielen ist der Controller 6 ausgebildet, um das Anzeigesignal so zu erzeugen, dass sich eine Darstellung des Primärziels 72, dessen Information dem wiedergegebenen Anzeigebereich zugeordnet ist, von der Darstellung der anderen Primärziele 32 und der Sekundärziele 33 unterscheidet.

Gemäß einigen Ausführungsbeispielen ist der Controller 6 ausgebildet, um ansprechend auf ein von der Eingangseinrichtung 4 empfangenes Kartenanzeigesignal, das zu einer Bedienbewegung eines Benutzers korrespondiert, das Anzeigesignal so zu verändern, dass eine verkleinerte Wiedergabe des Anzeigebereichs 2 bewirkt wird.

Gemäß einigen Ausführungsbeispielen ist der Controller 6 ausgebildet, um ansprechend auf ein von der Eingangseinrichtung 4 empfangenes Kartenanzeigesignal, das zu einer Bedienbewegung eines Benutzers korrespondiert, das Anzeigesignal so zu verändern, dass eine Wiedergabe des Anzeigebereichs 2 in einem Randbereich der Anzeigefläche 3 bewirkt wird.

Gemäß einigen Ausführungsbeispielen ist der Controller 6 ausgebildet, um das Anzeigesignal so zu erzeugen, dass der Anzeigebereich 2 die angezeigten Ziele 30, 23, 33, 72 nicht überlappt.

Gemäß einigen Ausführungsbeispielen ist der Controller 6 ausgebildet, um das Anzeigesignal so zu erzeugen, dass der Anzeigebereich 2 angezeigte Primärziele 32 nicht überlappt und Sekundärziele überlappt.

Gemäß einigen Ausführungsbeispielen ist der Controller 6 ausgebildet, um das Anzeigesignal so zu erzeugen, dass das gewählte Primärziel 72, 32 nicht von dem Anzeigebereich 2 überlappt ist.

Gemäß einigen Ausführungsbeispielen ist der Controller 6 ausgebildet, um ansprechend auf ein Menüauswahlsignal, das von der Eingangseinrichtung 4 empfangen wird und zu einer Auswahlgeste des Benutzers korrespondiert, ein Kategorieauswahlanzeigesignal zu erzeugen, das die Wiedergabe einer Mehrzahl von Kategorieauswahlbereichen 34 bewirkt, wobei jedem der Kategorieauswahlbereiche 34 jeweils zumindest ein Ziel 30, 23, 33, 72 zugeordnet ist.

Gemäß einigen Ausführungsbeispielen ist die Eingangseinrichtung 4 ausgebildet, um das Kategorieauswahlsignal zu empfangen, wenn eine Auswahlgeste eines Benutzers an einem Kategorieauswahlbereich 34 beginnt.

Gemäß einigen Ausführungsbeispielen ist der Controller 6 ausgebildet, um ansprechend auf das Kategorieauswahlsignal, wenn dem Kategorieauswahlbereich 34 eine Information zu einer Mehrzahl von Subkategorien zugeordnet ist, das Anzeigesignal so zu verändern, dass die Wiedergabe einer Mehrzahl von Subkategorieauswahlbereichen 77 bewirkt wird, wobei jedem der Subkategorieauswahlbereiche 77 zumindest ein Ziel 30, 23, 33, 72 zugeordnet ist. Gemäß einigen Ausführungsbeispielen ist die Eingangseinrichtung 4 ausgebildet, um das Kategorieauswahlsignal zu empfangen, wenn eine Auswahlgeste eines Benutzers an einem Subkategorieauswahlbereich 77 beginnt.

Einige Ausführungsbeispiele betreffen eine Vorrichtung mit einer Ansteuereinrichtung 1 nach einem der vorhergehenden Ausführungsbeispiele und einer Anzeigefläche 3, die eine Anzeige gemäß dem Anzeigesignal anzeigt.

Gemäß einigen weiteren Ausführungsbeispielen der Vorrichtung ist die Ansteuereinrichtung 1 ausgebildet ist, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu dem ausgewählten Primärziel 32, 72 bewirkt.

Ergänzend oder alternativ kann mit dem Verfahren eine Mehrzahl möglicher Ziele 30, 23, 33, 72 in einem Kartenausschnitt 31 auf der Anzeigefläche 3 markiert werden. Dazu kann ein Kategorieauswahlsignal empfangen werden, das zu einer Auswahl eines Benutzers korrespondiert, wobei das Kategorieauswahlsignal eine Information über eine gewählte Kategorie möglicher Ziele 30, 23, 33, 72 umfasst. Ferner kann ein Anzeigesignal erzeugt werden, das ansprechend auf das Kategorieauswahlsignal, eine Wiedergabe möglicher Primärziele 32 korrespondierend zu der Information der gewählten Kategorie und eine Wiedergabe von Sekundärzielen 32 zumindest einer anderen Kategorie in dem Kartenausschnitt bewirkt, wobei sich die Darstellung der Primärziele 32 der gewählten Kategorie von der Darstellung der Sekundärziele 33 der anderen Kategorie unterscheidet.

Einige Ausführungsbeispiele betreffen ein Computerprogramm zur Durchführung des Verfahrens nach einem der vorhergehenden Ausführungsbeispiele, wenn das Computerprogramm auf einer programmierbaren Hardwarekomponente abläuft.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Ansteuereinrichtung (1), die ausgebildet ist, um bei Herstellung einer Verbindung mit einem fahrzeuginternen Navigationsgerät ein Navigationssignal auszugeben, das eine Ausgabe einer Navigation mittels des fahrzeuginternen Navigationsgeräts zu einem ausgewählten Ziel (32, 72) bewirkt und zum Verändern einer Wiedergabe einer Mehrzahl von Anzeigebereichen (2) auf einer Anzeigefläche (3); wobei ein erster Anzeigebereich (2a) in einem Vordergrund einen zweiten Anzeigebereich (2b) in einem Hintergrund teilweise überlappt, wobei jedem der Anzeigebereiche (2) jeweils eine Information zu einem möglichen Ziel (30, 32, 33, 72) zugeordnet ist; mit
einer Eingangseinrichtung (4) zum Empfangen eines Speichersignals (5), das zu einer vorbestimmten Auswahlgeste eines Benutzers korrespondiert;
einem Controller (6), der ausgebildet ist, um ein Anzeigesignal (7) so zu erzeugen, dass es eine Wiedergabe eines Kartenabschnitts (31) als Hintergrund bewirkt, wobei die Ziele (30, 32, 33, 72) zumindest teilweise in einem Bereich des wiedergegebenen Kartenabschnitts (31) liegen; und der ausgebildet ist, um ansprechend auf das Speichersignal (5) das Anzeigesignal (7) zu erzeugen, das eine Anzeige des zweiten Anzeigebereichs (2b) in dem Vordergrund und eine Anzeige eines zu der Information des ersten Anzeigebereichs korrespondierenden Hinweisfeldes (8) außerhalb der Mehrzahl der Anzeigebereiche (2) bewirkt.

2. Ansteuereinrichtung (1) nach Anspruch 1, wobei der Controller (6) ferner ausgebildet ist, um ansprechend auf ein Aufrufsignal (9), das zu einer weiteren Auswahlgeste des Benutzers korrespondiert, das Anzeigesignal (7) so zu verändern, dass es eine Wiedergabe des ersten Anzeigebereichs (2a) zu dem das Hinweisfeld (8) korrespondiert, bewirkt.

3. Ansteuereinrichtung (1) nach Anspruch 2, wobei die Eingangseinrichtung (4) ausgebildet ist, um das Aufrufsignal (9) zu empfangen, wenn die Auswahlgeste zu der das Aufrufsignal (9) korrespondiert, an dem Hinweisfeld (8) beginnt.

4. Ansteuereinrichtung (1) nach einem der vorhergehenden Ansprüche, wobei die Eingangseinrichtung (4) ausgebildet ist, um das Speichersignal (5) zu empfangen, wenn die Auswahlgeste, zu der das Speichersignal (5) korrespondiert, an dem Anzeigebereich (2a) beginnt.

5. Ansteuereinrichtung (1) nach einem der vorhergehenden Ansprüche, wobei der Controller (6) ausgebildet ist, um ansprechend auf ein Löschsignal (10), das zu einer weiteren Auswahlgeste eines Benutzers korrespondiert, und das von der Eingangseinrichtung (4) empfangen wird, das Anzeigesignal (7) so zu erzeugen, dass eine Anzeige des zweiten Anzeigebereichs (2b) in dem Vordergrund bewirkt und der erste Anzeigebereich (2a) gelöscht wird.

6. Ansteuereinrichtung (1) nach Anspruch 5, wobei die Eingangseinrichtung (4) ausgebildet ist, um das Löschsignal (10) zu empfangen, wenn die Auswahlgeste, zu der das Löschsignal (10) korrespondiert, an dem Anzeigebereich (2a) beginnt und wobei sich die Auswahlgeste in eine andere Richtung erstreckt, als die Auswahlgeste, zu der das Speichersignal (5) korrespondiert.

7. Ansteuereinrichtung (1) nach einem der Ansprüche 2 bis 6, wobei der Controller (6) ausgebildet ist, um das Anzeigesignal (7) so zu erzeugen, dass das Hinweisfeld (8) zu der Information einer Mehrzahl von Anzeigebereichen (2) korrespondiert.

8. Ansteuereinrichtung (1) nach Anspruch 7, wobei der Controller (6) ausgebildet ist, um ansprechend auf das Aufrufsignal (9) das Anzeigesignal (7) so zu verändern, dass eine Wiedergabe der Anzeigebereiche (2) bewirkt wird, zu denen das Hinweisfeld (8) korrespondiert, so dass diese nebeneinander angeordnet sind.

9. Ansteuereinrichtung (1) nach einem der vorhergehenden Ansprüche, wobei die Eingangseinrichtung (4) ausgebildet ist, um ein Zielsignal (11) zu empfangen, das eine Information umfasst, zu einer Mehrzahl von möglichen Zielen (30, 32, 33, 72), wobei die Anzeigebereiche (2) basierend auf dem Zielsignal (11) angezeigt werden.

10. Ansteuereinrichtung (1) nach einem der vorhergehenden Ansprüche, wobei die Eingangseinrichtung (4) ausgebildet ist, um ein Temperatursignal (12) zu empfangen, das eine Information über eine Temperatur umfasst und die Anzeigebereiche (2) basierend auf der Information des Temperatursignals (12) angezeigt werden.

11. Ansteuereinrichtung (1) nach einem der vorhergehenden Ansprüche, wobei die Eingangseinrichtung (4) ausgebildet ist, um ein Umgebungssignal (13) zu empfangen, das eine Information über eine Umgebung umfasst und die Anzeigebereiche (2) basierend auf der Information des Umgebungssignals (13) angezeigt werden.

12. Vorrichtung mit einer Ansteuereinrichtung (1) nach einem der vorhergehenden Ansprüche und ferner umfassend: eine Anzeigefläche (3), die eine Anzeige gemäß dem Anzeigesignal (7) anzeigt.

13. Verfahren (14) zum Betrieb einer Ansteuereinrichtung (1) gemäß Anspruch 1, umfassend:
Wiedergabe eines Kartenabschnitts (31) als Hintergrund, wobei die Ziele (30, 32, 33, 72) zumindest teilweise in einem Bereich des wiedergegebenen Kartenabschnitts (31) liegen;
Anzeigen (15) einer Mehrzahl von Anzeigebereichen (2) auf einer Anzeigefläche (3), wobei ein erster Anzeigebereich (2a) in einem Vordergrund einen zweiten Anzeigebereich (2b) in einem Hintergrund teilweise überlappt, wobei jedem der Anzeigebereiche (2) jeweils eine Information zu einem möglichen Ziel (30, 32, 33, 72) zugeordnet ist;
Empfangen (16) eines Speichersignals (5), das zu einer vorbestimmten Auswahlgeste eines Benutzers korrespondiert;
Erzeugen (17) eines Anzeigesignals (7), ansprechend auf das Speichersignal (5),
wobei das Anzeigesignal (7) eine Anzeige des zweiten Anzeigebereichs (2b) in dem Vordergrund und eine Anzeige eines zu der Information des ersten Anzeigebereichs (2a) korrespondierenden Hinweisfeldes (8) in einem Bereich außerhalb der Mehrzahl der Anzeigebereiche (2) auf der Anzeigefläche (3) bewirkt;
Herstellen einer Verbindung der Ansteuereinrichtung (1) mit einem fahrzeuginternen Navigationsgerät;
Ausgeben eines Navigationssignals, das eine Ausgabe einer Navigation mittels des fahrzeuginternen Navigationsgeräts zu einem ausgewählten Ziel (32, 72) bewirkt.

14. Computerprogramm zur Durchführung des Verfahrens (14) nach Anspruch 13, wenn das Computerprogramm auf einer programmierbaren Hardwarekomponente abläuft.

## Claims

1. Actuating device (1) designed so as, on set-up of a connection to a vehicle-internal navigation appliance, to output a navigation signal that causes an output of a navigation by means of the vehicle-internal navigation appliance to a selected destination (32, 72) and for altering a reproduction of a plurality of display areas (2) on a display panel(3); wherein a first display area (2a) in a foreground partially overlaps a second display area (2b) in a background, each of the display areas (2) having a respective associated piece of information pertaining to a possible destination (30, 32, 33, 72); having
an input device (4) for receiving a store signal (5) corresponding to a predetermined selection gesture by a user;
a controller (6) designed to generate a display signal (7) such that it causes a reproduction of a map section (31) as background, wherein at least some of the destinations (30, 32, 33, 72) are in an area of the reproduced map section (31); and designed to respond to the store signal (5) by generating the display signal (7), which causes a display of the second display area (2b) in the foreground and a display of an advice box (8), corresponding to the information of the first display area, outside the plurality of display areas (2) .

2. Actuating device (1) according to Claim 1, wherein the controller (6) is further designed to respond to a call signal (9) corresponding to a further selection gesture by the user by altering the display signal (7) such that it causes a reproduction of the first display area (2a), to which the advice box (8) corresponds.

3. Actuating device (1) according to Claim 2, wherein the input device (4) is designed to receive the call signal (9) if the selection gesture to which the call signal (9) corresponds begins at the advice box (8) .

4. Actuating device (1) according to one of the preceding claims, wherein the input device (4) is designed to receive the store signal (5) if the selection gesture to which the store signal (5) corresponds begins at the display area (2a).

5. Actuating device (1) according to one of the preceding claims, wherein the controller (6) is designed to respond to an erase signal (10) corresponding to a further selection gesture by a user, and received by the input device (4), by generating the display signal (7) such that a display of the second display area (2b) in the foreground is caused and the first display area (2a) is erased.

6. Actuating device (1) according to Claim 5, wherein the input device (4) is designed to receive the erase signal (10) if the selection gesture to which the erase signal (10) corresponds begins at the display area (2a), and wherein the selection gesture extends in a different direction from the selection gesture to which the store signal (5) corresponds.

7. Actuating device (1) according to one of Claims 2 to 6, wherein the controller (6) is designed to generate the display signal (7) such that the advice box (8) corresponds to the information of a plurality of display areas (2).

8. Actuating device (1) according to Claim 7, wherein the controller (6) is designed to respond to the call signal (9) by altering the display signal (7) such that a reproduction of the display areas (2) to which the advice box (8) corresponds is caused, that they are arranged next to one another.

9. Actuating device (1) according to one of the preceding claims, wherein the input device (4) is designed to receive a destination signal (11) comprising a piece of information pertaining to a plurality of possible destinations (30, 32, 33, 72), wherein the display areas (2) are displayed on the basis of the destination signal (11).

10. Actuating device (1) according to one of the preceding claims, wherein the input device (4) is designed to receive a temperature signal (12) comprising a piece of information about a temperature, and the display areas (2) are displayed on the basis of the information of the temperature signal (12).

11. Actuating device (1) according to one of the preceding claims, wherein the input device (4) is designed to receive a surroundings signal (13) comprising a piece of information about surroundings, and the display areas (2) are displayed on the basis of the information of the surroundings signal (13).

12. Apparatus having an actuating device (1) according to one of the preceding claims and further comprising: a display panel (3) displaying a display according to the display signal (7).

13. Method (14) for operating an actuating device (1) according to Claim 1, comprising:
reproducing a map section (31) as background, wherein at least some of the destinations (30, 32, 33, 72) are in an area of the reproduced map section (31) ;
displaying (15) a plurality of display areas (2) on a display panel (3), wherein a first display area (2a) in a foreground partially overlaps a second display area (2b) in a background, each of the display areas (2) having a respective associated piece of information pertaining to a possible destination (30, 32, 33, 72);
receiving (16) a store signal (5) corresponding to a predetermined selection gesture by a user;
generating (17) a display signal (7), in response to the store signal (5), wherein the display signal (7) causes a display of the second display area (2b) in the foreground and a display of an advice box (8), corresponding to the information of the first display area (2a), in an area outside the plurality of display areas (2) on the display panel (3);
setting up a connection from the actuating device (1) to a vehicle-internal navigation appliance;
outputting a navigation signal
that causes an output of a navigation by means of the vehicle-internal navigation appliance to a selected destination (32, 72).

14. Computer program for performing the method (14) according to Claim 13 when the computer program runs on a programmable hardware component.

## Revendications

1. Système de commande (1) qui est réalisé pour délivrer, lors de l'établissement d'une connexion à un appareil de navigation embarqué dans un véhicule, un signal de navigation qui amène l'appareil de navigation embarqué à délivrer une information de navigation vers une destination sélectionnée (32, 72) et pour modifier une représentation d'une pluralité de zones d'affichage (2) sur une surface d'affichage (3) ; dans lequel une première zone d'affichage (2a) sur un premier plan recouvre en partie une seconde zone d'affichage (2b) sur un arrière-plan, dans lequel une information concernant une destination possible (30, 32, 33, 72) est respectivement associée à chacune des zones d'affichage (2) ; comportant
un système d'entrée (4) servant à la réception d'un signal de mémoire (5) qui correspond à un geste de sélection prédéfini d'un utilisateur ;
un contrôleur (6) qui est réalisé pour générer un signal d'affichage (7) de telle sorte que celui-ci provoque une reproduction en arrière-plan d'une partie de carte (31), dans lequel les destinations (30, 32, 33, 72) se situent au moins en partie dans une zone de la partie de carte reproduite (31) ; et qui est réalisé pour générer, en réponse au signal de mémoire (5), le signal d'affichage (7) qui provoque un affichage de la seconde zone d'affichage (2b) au premier plan et un affichage d'un champ d'indication (8) correspondant à l'information de la première zone d'affichage en-dehors de la pluralité des zones d'affichage (2).

2. Système de commande (1) selon la revendication 1, dans lequel le contrôleur (6) est en outre réalisé pour modifier le signal d'affichage (7) en réponse à un signal d'appel (9) correspondant à un autre geste de sélection de l'utilisateur de manière à ce que le signal d'affichage provoque une reproduction de la première zone d'affichage (2a) à laquelle correspond le champ d'indication (8).

3. Système de commande (1) selon la revendication 2, dans lequel le système d'entrée (4) est réalisé pour recevoir le signal d'appel (9) lorsque le geste de sélection auquel correspond le signal d'appel (9) commence dans le champ d'indication (8).

4. Système de commande (1) selon l'une des revendications précédentes, dans lequel le système d'entrée (4) est réalisé pour recevoir le signal de mémoire (5) lorsque le geste de sélection auquel correspond le signal de mémoire (5) commence dans la zone d'affichage (2a).

5. Système de commande (1) selon l'une des revendications précédentes, dans lequel le contrôleur (6) est réalisé pour générer le signal d'affichage (7) en réponse à un signal d'effacement (10) correspondant à un autre geste de sélection d'un utilisateur et reçu par le système d'entrée (4), de manière à provoquer un affichage de la seconde zone d'affichage (2b) au premier plan et à effacer la première zone d'affichage (2a).

6. Système de commande (1) selon la revendication 5, dans lequel le système d'entrée (4) est réalisé pour recevoir le signal d'effacement (10) lorsque le geste de sélection auquel correspond le signal d'effacement (10) commence dans la zone d'affichage (2a) et dans lequel le geste de sélection s'étend dans une direction différente de celle du geste de sélection auquel correspond le signal de mémoire (5).

7. Système de commande (1) selon l'une des revendications 2 à 6, dans lequel le contrôleur (6) est réalisé pour générer le signal d'affichage (7) de manière à ce que le champ d'indication (8) corresponde à l'information d'une pluralité de zones d'affichage (2).

8. Système de commande (1) selon la revendication 7, dans lequel le contrôleur (6) est réalisé pour modifier le signal d'affichage (7) en réponse au signal d'appel (9) de manière à provoquer une reproduction des zones d'affichage (2) auxquelles correspond le champ d'indication (8), afin que celles-ci soient disposées côte à côte.

9. Système de commande (1) selon l'une des revendications précédentes, dans lequel le système d'entrée (4) est réalisé pour recevoir un signal de destination (11) comprenant une information concernant une pluralité de destinations possibles (30, 32, 33, 72), dans lequel les zones d'affichage (2) sont affichées sur la base du signal de destination (11).

10. Système de commande (1) selon l'une des revendications précédentes, dans lequel le système d'entrée (4) est réalisé pour recevoir un signal de température (12) comprenant une information concernant une température et les zones d'affichage (2) sont affichées sur la base de l'information du signal de température (12).

11. Système de commande (1) selon l'une des revendications précédentes, dans lequel le système d'entrée (4) est réalisé pour recevoir un signal d'environnement (13) comprenant une information concernant un environnement et les zones d'affichage (2) sont affichées sur la base de l'information du signal d'environnement (13).

12. Dispositif comportant un système de commande (1) selon l'une des revendications précédentes et comprenant en outre : une surface d'affichage (3) qui affiche un affichage conformément au signal d'affichage (7) .

13. Procédé (14) servant à mettre en oeuvre un système de commande (1) selon la revendication 1, consistant à :
reproduire une partie de carte (31) en arrière-plan, dans lequel les destinations (30, 32, 33, 72) se situent au moins en partie dans une zone de la partie de carte reproduite (31) ;
afficher (15) une pluralité de zones d'affichage (2) sur une surface d'affichage (3), dans lequel une première zone d'affichage (2a) dans un premier plan recouvre en partie une seconde zone d'affichage (2b) dans un arrière-plan, dans lequel une information concernant une destination possible (30, 32, 33, 72) est respectivement associée à chacune des zones d'affichage (2) ;
recevoir (16) un signal de mémoire (5) correspondant à un geste de sélection prédéfini d'un utilisateur ;
générer (17) un signal d'affichage (7) en réponse au signal de mémoire (5), dans lequel le signal d'affichage (7) provoque un affichage de la seconde zone d'affichage (2b) au premier plan et un affichage d'un champ d'indication (8) correspondant à l'information de la première zone d'affichage (2a) dans une zone extérieure à la pluralité des zones d'affichage (2) sur la zone d'affichage (3) ;
établir une connexion du système de commande (1) à un appareil de navigation embarqué dans un véhicule ;
délivrer un signal de navigation qui provoque la délivrance d'une information de navigation vers une destination sélectionnée (32, 72) au moyen de l'appareil de navigation embarqué dans le véhicule.

14. Programme d'ordinateur servant à mettre en oeuvre le procédé (14) selon la revendication 13 lorsque le programme d'ordinateur est exécuté sur un composant matériel programmable.
